# EUROPEAN PATENT SPECIFICATION

(11) **EP 4 304 799 B1**
(45) Date of publication and mention of the grant of the patent: **21.10.2026**
(21) Application number: 22766352.3
(22) Date of filing: 10.03.2022
(51) Int. Cl.: B23D 45/16, B23D 29/00, B26B 25/00, B28D 1/22

(54) **POWER TOOL**
ELEKTROWERKZEUG
OUTIL ÉLECTRIQUE

(30) Priority: 12.03.2021 CN 202120523192 U; 12.03.2021 CN 202120520939 U; 12.03.2021 CN 202110270624; 12.11.2021 CN 202122778766 U; 12.11.2021 CN 202122779759 U; 12.11.2021 CN 202111345359
(43) Date of publication of application: 17.01.2024
(73) Proprietor: Globe (Jiangsu) Co., Ltd., Changzhou, Jiangsu 213023 (CN)
(72) Inventor: LI, Jingshan, hangzhou, Jiangsu 213023 (CN); ZHANG, Lingao, hangzhou, Jiangsu 213023 (CN)
(74) Representative: Bergenstråhle & Partners AB
(86) International application number: PCT/CN2022/080102
(87) International publication number: WO 2022/188830

(56) References cited:
- CN-A- 104 722 835
- CN-A- 106 735 546
- CN-A- 109 216 745
- CN-A- 111 559 015
- CN-A- 111 559 015
- CN-A- 111 570 912
- CN-A- 113 000 928
- CN-U- 214 477 643
- FR-A1- 2 910 829
- JP-A- H10 225 925

## Description

### TECHNICAL FIELD

The disclosure relates to the field of power tools and in particular to the field of cutting devices and in particular to a power tool and a cutting tool.

### BACKGROUND

In daily work, a cutting saw is a cutting tool powered by electric power, gasoline and the like and is generally used to cut wood, stone, steel, concrete and the like, so that time, manpower, etc. consumed by cutting materials are effectively saved, thereby improving the work efficiency of users. However, in a motor-driven cutting tool, a motor provided in a housing is connected to a cutting disc via a transmission mechanism, and in a conventional transmission structure, for example, the motor drives a belt to transmit power, although the structure is simple and the transmission is smooth and noise-free, but the belt is easy to slip, easy to wear and has a short service life when overloaded, thus a large torque cannot be transmitted and an accurate transmission ratio cannot be maintained.

CN 111559015 discloses an electric cutting tool comprising a working assembly and a controlling assembly used for controlling the working assembly. The working assembly comprises a shell body, a driving unit and a power supply unit. A cooling structure is formed inside the shell body and is used for cooling the driving unit and the power supply unit.

CN 104722835 discloses an electric circuit saw which comprises a saw main body and a battery pack detachably installed on the circular saw main body. The circular saw main body comprises a saw blade, a motor and a casing. The motor is an outer rotor motor.

### SUMMARY

In view of the above-mentioned shortcomings, the disclosure provides a power tool and a cutting tool, which can solve the technical problems that the belt is prone to slip, easy to wear and has a short service life when overloaded, cannot transmit a large torque and cannot maintain an accurate transmission ratio.

The present invention provides a power tool. The power tool includes a housing, a motor, a power supply, a working assembly, and a transmission mechanism. The motor is mounted in the housing and the motor has a motor shaft. The power supply is configured to provide energy for the motor. The working assembly rotates along a rotation axis of the working assembly itself. The transmission mechanism has a transmission shaft, the transmission shaft is connected with the motor shaft, so as to transmit power from the motor to the working assembly. The motor is an outer rotor motor, and the rotation axis of the working assembly intersects an axis of the transmission shaft.

The transmission shaft and the motor shaft are on a same axis and the transmission shaft and the motor shaft are connected by a coupling. A a bevel gear assembly is arranged between the transmission shaft and the rotation axis, the bevel gear assembly includes a driving bevel gear and a driven bevel gear, the driving bevel gear is arranged on the transmission shaft, and the driven bevel gear is arranged on the rotation axis. First bearings are respectively installed at both ends of the transmission shaft, the first bearings are installed in a cover on the outside of the transmission mechanism and the cover is fixedly connected to the housing, so that each structural of the transmission mechanism is covered inside the cover.

The working assembly is a cutter, and a blade guard is mounted on an outer side of the cutter, and the blade guard is fixedly connected to the cover through a mounting base.

In an alternative embodiment, a second bearing is mounted in the mounting base, the second bearing is sleeved on the rotating axis, and the second bearing is arranged between the mounting base and the rotating axis.

The power tool further includes a guard adjustment mechanism, and the guard adjustment mechanism is configured to adjust an angle of the blade guard.

In an alternative embodiment, a shaft sleeve is provided between the rotating axis and the cutter, and the shaft sleeve is coupled with the rotating axis.

In an alternative embodiment, two step structures with different diameters are arranged on an outer side of the shaft sleeve, so as to adapt to two cutters having inner holes with different diameters.

In an alternative embodiment, the power tool further includes a cutter limiting device. The cutter limiting device includes a limiting button, a limiting column and a spring, the limiting button is mounted on the housing, one end of the limiting column is connected with the limiting button, and the other end of the limiting column is provided with a gasket, and the spring sleeves the limiting column and is arranged between the gasket and the limiting button.

In an alternative embodiment, a plurality of limiting holes matched with the limiting column are arranged on the driven bevel gear, and when the limiting column extend into one of plurality of the limiting holes, the driven bevel gears are locked, so that the cutters are locked.

### BRIEF DESCRIPTION OF THE DRAWINGS

In order to more clearly illustrate the technical solutions of the embodiments of the disclosure or the prior art, the drawings required in the description or the prior art will be briefly described below. Obviously, the drawings in the following description are merely some embodiments of the disclosure, and those skilled in the art may obtain other drawings according to these drawings without creative efforts.
FIG. 1 is a schematic structural diagram of a hand-held power tool according to an embodiment of the disclosure.
FIG. 2 is a schematic structural diagram of another angle of a hand-held power tool according to an embodiment of the disclosure.
FIG. 3 is an assembly diagram of a motor and a transmission mechanism of a hand-held power tool according to an embodiment of the disclosure.
FIG. 4 is a schematic structural diagram of a housing of a hand-held power tool according to an embodiment of the disclosure.
FIG. 5 is an assembly diagram of a motor and a transmission mechanism of a hand-held power tool from another angle according to an embodiment of the disclosure.
FIG. 6 is an assembly diagram of a transmission mechanism and a cutter in a handheld electric tool according to an embodiment of the disclosure.
FIG. 7 is a schematic top view of an assembly of a transmission mechanism and a cutter in a hand-held power tool according to an embodiment of the disclosure.
FIG. 8 is a cross-sectional view taken along line A-A in FIG. 7.
FIG. 9 is a cross-sectional view taken along line B-B in FIG. 7.
FIG. 10 is a schematic structural diagram of a transmission mechanism in a hand-held power tool according to an embodiment of the disclosure.
FIG. 11 is a front view of FIG. 10.
FIG. 12 is a schematic structural diagram of a power tool according to an embodiment of the disclosure.
FIG. 13 is a schematic structural diagram of another angle of a power tool according to an embodiment of the disclosure.
FIG. 14 is another assembly diagram of a motor and a transmission mechanism in a power tool according to an embodiment of the disclosure.
FIG. 15 is a schematic structural diagram of an air inlet in an electric tool according to an embodiment of the disclosure.
FIG. 16 is a schematic structural diagram of another angle of an air inlet in an electric tool according to an embodiment of the disclosure.
FIG. 17 is a schematic structural diagram of a dustproof cover in an electric tool according to an embodiment of the disclosure.
FIG. 18 shows a partially cut-away view of a housing of a cutting tool according to an embodiment of the disclosure.
FIG. 19 is a half cross-sectional view of a cutting tool according to an embodiment of the disclosure.
FIG. 20 is a partial enlarged view of the region I in FIG. 19.
FIG. 21 shows a view of a battery pack according to an embodiment of the cutting tool of the disclosure.
FIG. 22 is a view of another direction of a battery pack in an embodiment of a cutting tool according to the disclosure.
FIG. 23 is a partial cross-sectional view of the cover body and the battery holder in a buckled position according to an embodiment of the disclosure.
FIG. 24 is a partial enlarged view of the region II in FIG. 23.
FIG. 25 shows a view of a cover body in an embodiment of the cutting tool of the disclosure.
FIG. 26 shows another view of the cover body in an embodiment of the cutting tool of the disclosure.
FIG. 27 is a front view of a cover body in an embodiment of the cutting tool of the disclosure.
FIG. 28 shows the left view of FIG. 27.
FIG. 29 is a schematic view showing an installation of a spraying cooling portion according to an embodiment of the cutting tool of the disclosure.
FIG. 30 is a schematic structural diagram of an adapter of a spraying cooling portion of a cutting tool according to an embodiment of the disclosure.
FIG. 31 is a schematic structural diagram of another adapter of a spraying cooling portion of a cutting tool according to an embodiment of the disclosure.
FIG. 32 is a schematic structural diagram of a positioning protrusion on a second boss in a spraying cooling portion of a cutting tool according to an embodiment of the disclosure.
FIG. 33 is a schematic cross-sectional view of a spray cooling portion of a cutting tool according to an embodiment of the disclosure.
FIG. 34 is a partial enlarged view of the region III in FIG. 33.
FIG. 35 is a view showing a side of of a cutting tool according to an embodiment of the disclosure.
FIG. 36 is a view showing a side away from a transmission mechanism of the cutting tool according to an embodiment of the disclosure.
FIG. 37 is a schematic exploded view of a cutting tool according to an embodiment of the disclosure.
FIG. 38 is a schematic structural diagram of a pipe clamp according to an embodiment of a cutting tool of the disclosure.
FIG. 39 is a schematic overall three-dimensional diagram of a cutting tool in an embodiment of the disclosure.
FIG. 40 is a partial enlarged view of the area IV of FIG. 39.
FIG. 41 is a schematic diagram of a guard adjustment mechanism after a transmission mechanism of a cutting tool is removed according to an embodiment of the disclosure.
FIG. 42 is a schematic exploded view of a guard adjustment mechanism in an embodiment of the cutting tool of the disclosure.
FIG. 43 is a schematic view showing an installation of the mounting plate and the guard adjustment mechanism on a shell of a transmission mechanism according to an embodiment of the disclosure.
FIG. 44 is a partial enlarged view of the region VI in FIG. 43.
FIG. 45 is a schematic structural diagram of a guard adjustment mechanism and an adjustment track groove in an embodiment of the cutting tool of the disclosure.
FIG. 46 is an exploded view of a mounting structure of a blade guard on a shell of a transmission mechanism according to an embodiment of the disclosure.

### BRIEF DESCRIPTION OF THE ELEMENTS

100, housing; 102, first handle; 103, second handle; 104, air inlet; 105, air outlet; 106, dustproof cover; buckle 1061; elastic buckle 1062; a shielding portion 1063; air inlet portion 1064; magnetic attraction structure 107; dustproof cover mounting groove 108; first clamping groove 1081; second clamping groove 1082; 110, first casing; 111, first baffle; 112, second baffle; 113, installation groove; 120, second casing; 130, battery pack cavity; 131, battery holder; 1311, second hooking body; 1312, connecting arm; 1313, bracket; 132, cover body; 1321, coating structure; 1322, anti-skid structure; 1323, first hooking body; 1324, pin shaft through-hole; 1325, claw; 133, cooling air channel; 134, locking structure; 135, battery pack cavity air inlet; 136, battery pack cavity air outlet; 137, pin shaft; 200, power supply portion; 210, battery pack; 211, first side wall; 2111, first heat dissipation portion; 2112, third heat dissipation portion; 212, second side wall; 2121, second heat dissipation portion; 2122, positioning surface; 2123, power receiving terminal; 213, cell; 214, battery button; 215, power display module; 300, driving portion; 310, outer rotor motor; 311, motor shaft; 312, flange; 341, first bolt; 400, cutting portion; 401, cutter; 402, second bearing; 403, mounting base; 410, blade guard; 411, guard side wall; 411, first guard side wall; 411 b, second guard side wall; 4111, connecting through hole; 412, second boss; 413, second sealing surface; 414, positioning protrusion; 42, cutter fixing plate; 421, first fixing plate; 422, second fixing plate; 420, adjustment track groove; 4210, arc-shaped track groove; 4220, limiting groove; 43 second bolt; 4523, adjustment handle mounting seat; 45231, limit perforation; 470, adjustment handle; 4710, first handle body; 4720, second handle body; 500, spraying cooling portion; 500a, first spraying cooling portion; 500 b, second spraying cooling portion; 510, spraying head; 510a, first spraying head; 510b, second spraying head; 511, spray port; 511a, first spray port; 511b, second spray port; 512, liquid inlet; 513, channel; 514, first boss; 515, first sealing surface; 516, block; 517, connecting rod; 518, dust-proof rib; 520, adapter; 520a, first adapter; 520b second adapter; 521, first adapter sealing surface; 522, second adapter sealing surface; 523, liquid storage cavity; 524, pipe joint; 524a, first pipe joint; 524b, second pipe joint; 5241, protruding portion; 5242, guide taper surface; 5243, cylindrical section; 5244, flow channel opening; 525, main pipe joint; 526, positioning groove; 527, second cylindrical surface; 530, cooling liquid supply main pipe; 5310, clamp hoop; 540, pipe clamp; 5411, pipe through hole; 5412, and elongated hole; 550, branch pipe; 560, valve; 570, quick connector; 580, first sealing body; 590, the second sealing body; 60, transmission mechanism; 61, coupling; 62, transmission shaft; 621, first bearing; 63, rotation axis; 631, shaft shoulder; 632, threaded hole; 64, driving bevel gear; 65, driven bevel gear; 651, limiting hole; 601, cover; 660, cutter limiting device; 661, limiting button; 662, limiting column; 663, spring; 700, guard adjustment mechanism; 710, slider; 711, first stopping body; 720, slider mounting seat; 721, first mounting hole; 722, second mounting hole; 723, third mounting hole; 730, operation portion; 731, arc-shaped operation surface; 740, a slider anti-disengaging device; 7442, adjustment push button; 7443, adjustment member; 7412, water outlet; 750, guide body; 751, second stopping body; 752, annular groove; 760, first screw; 770, first pin body; 7600, mounting plate; 7610, guiding through hole.

### DETAILED DESCRIPTION

The following describes the implementation of the disclosure through specific embodiments, and those skilled in the art can easily understand other advantages and effects of the disclosure from the content disclosed in this specification. The disclosure can also be implemented or applied through other different specific embodiments, and various details in this specification can also be modified or changed based on different viewpoints and applications without departing from the disclosure. It should be noted that, in the case of no conflict, the following embodiments and features in the embodiments may be combined with each other. It should also be understood that the terms used in the embodiments of the present disclosure are used to describe specific embodiments, and are not intended to limit the protection scope of the present disclosure. The test methods of the specific conditions are not indicated in the following examples, usually according to conventional conditions, or according to the conditions suggested by each manufacturer.

When an embodiment gives a numerical range, it should be understood that, unless otherwise specified in the disclosure, any numerical value ranges between two endpoints of each numerical range and any numerical value between the two endpoints. Unless otherwise defined, all technical and scientific terms used in the disclosure are well known to those skilled in the art from the mastering of the prior art and the disclosure, and the present disclosure may also be implemented using any method, apparatus, and material similar to or equivalent to the method, apparatus, material, or the like in the embodiments of the disclosure.

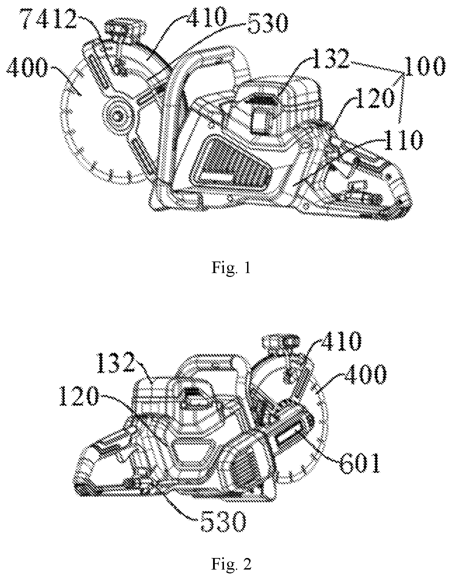

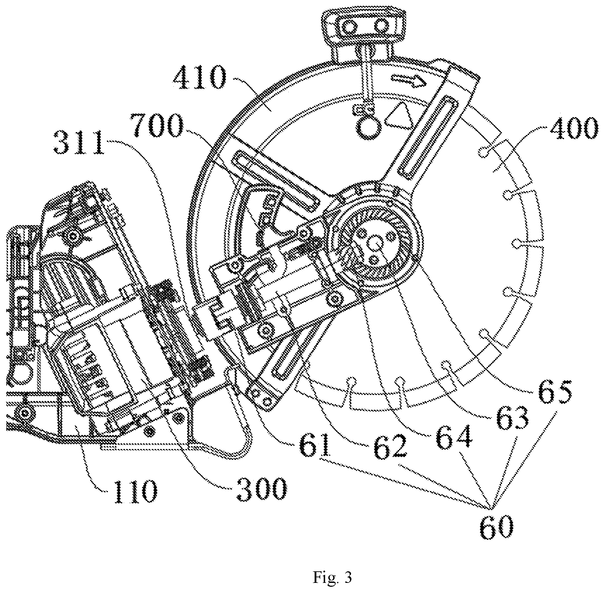

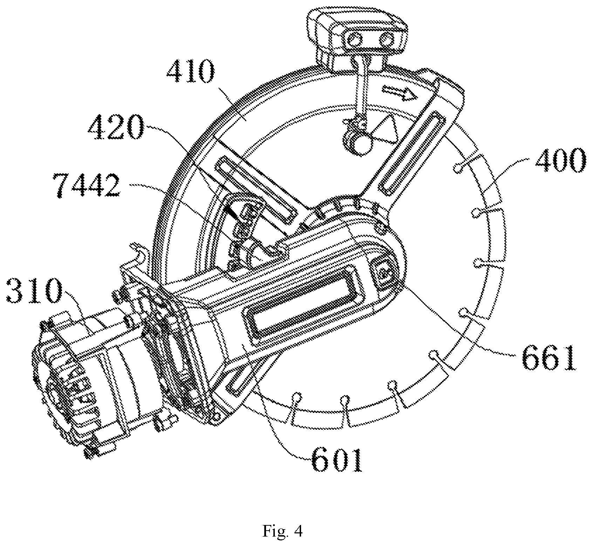

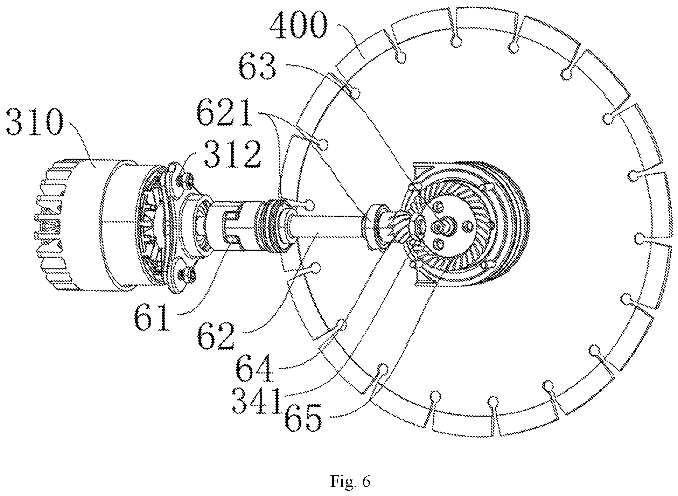

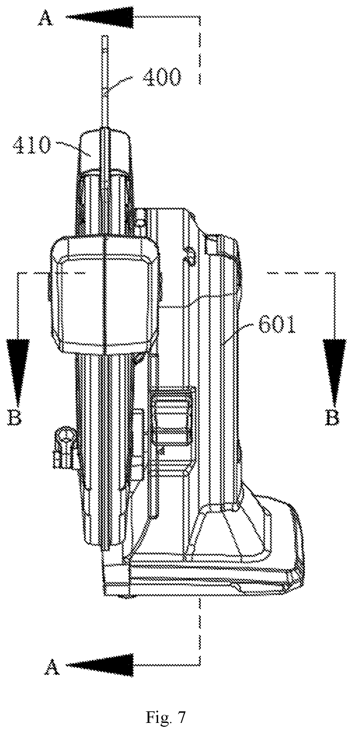

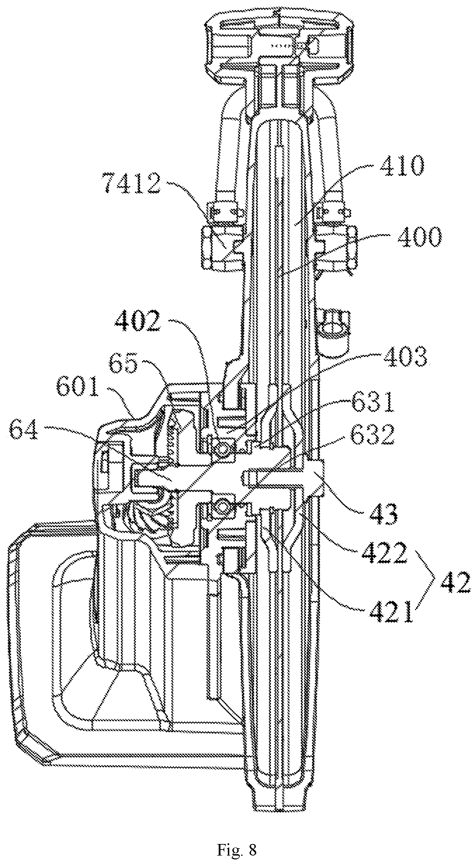

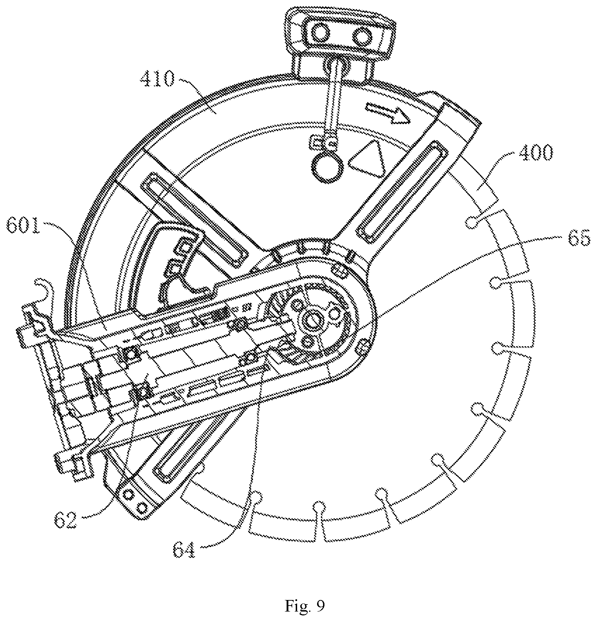

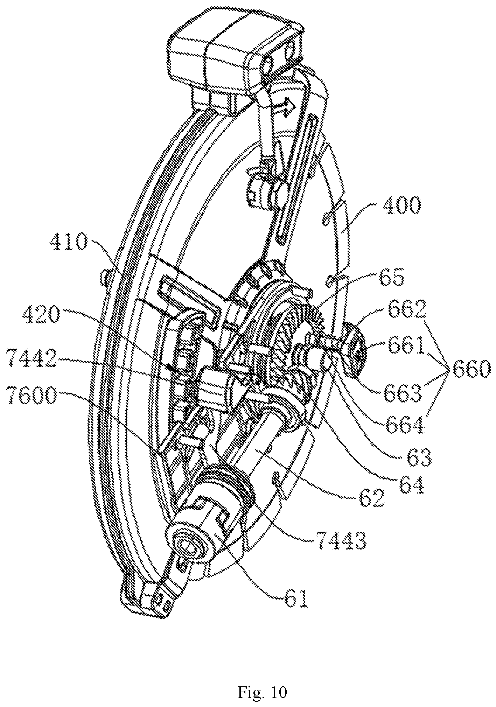

Please refer to FIG. 1 through FIG. 11. The disclosure provides a power tool. The power tool includes a housing 100, a driving portion 300, a transmission mechanism 60, and a cutting portion 400. The driving portion 300 includes an outer rotor motor 310. The outer rotor motor 310 is mounted in the housing 100, the transmission mechanism 60 is connected to a motor shaft 311 of the outer rotor motor 310, the cutting portion 400 is connected to the transmission mechanism 60, and the outer rotor motor 310 drives the cutting portion 400 to work by the transmission mechanism 60.

As shown in FIG. 1 to FIG. 9, in the embodiment, the housing 100 includes a first casing 110, a second casing 120, and a cover body 132. The first casing 110 and the second casing 120 are fixedly connected to form a cavity, the cavity is configured to mount a battery pack, and the cover body 132 is disposed at the top of the cavity and is connected to the first casing 110 and the second casing 120. In addition, a motor accommodating cavity is further defined between the first casing 110 and the second casing 120 for accommodating the outer rotor motor 310. In the embodiment, the motor 20 is an outer rotor brushless direct current motor. In the embodiment, a flange 312 is mounted on one end of a stator of the outer rotor motor 310, a Hall plate is further mounted between the stator of the outer rotor motor 310 and the flange 312, and a temperature sensor is mounted on the stator of the outer rotor motor 310, so as to enhance the control and protection functions of the motor.

As shown in FIGS. 1 to 9, in the embodiment, the transmission mechanism 60 is directly connected to the outer rotor motor 310. The transmission mechanism 60 includes a coupling 61, a transmission shaft 62, a rotation axis 63, and a bevel gear assembly. The bevel gear assembly is arranged between the transmission shaft 62 and the rotation axis 63, the bevel gear assembly includes a driving bevel gear 64 and a driven bevel gear 65, and the driving bevel gear 64 is arranged on the transmission shaft 62, the driven bevel gear 65 is arranged on the rotation axis 63. One end of the transmission shaft 62 is directly connected with the motor shaft 311 of the outer rotor motor 310 through the coupling 61, and the other end of the transmission shaft 62 is provided with the driving bevel gear 64, and the driving bevel gear 64 is fixedly installed on the transmission shaft 62 by bolts 341. First bearings 621 are respectively installed at both ends of the transmission shaft 62, the first bearing 621 is installed in a cover 601 outside the transmission mechanism 60 to ensure smooth and stable rotation of the transmission shaft 62. The cover 601 is fixedly connected to the housing 100, so that each structural of the transmission mechanism 60 is covered inside, so as to realize the protection function of the transmission mechanism 60. In the embodiment, an axis of the rotation axis 63 of the cutting portion 400 intersects an axis of the transmission shaft 62, the transmission shaft 62 and the motor shaft 311 are substantially parallel to each other, and further, the transmission shaft 62 and the motor shaft 20 are located on a same axis, so as to facilitate transmission.

As shown in FIG. 1 to FIG. 9, in this embodiment, one end of the rotation axis 63 is rotatably connected to the cover 601, and the other end of the rotation axis 63 is installed in a mounting base 403. A second bearing 402 is installed in the mounting base 403, the rotation axis 63 is located in the second bearing 402, and the mounting base 403 is used to install a blade guard 410. That is, the rotation axis 63 is erected on the cover 601 and the mounting base 403, and is rotatably connected to the cover 601. The driven bevel gear 65 is mounted on one end of the rotation axis 63 and located in the cover 601 to engage with the driving bevel gear 64.

As shown in FIG. 1 to FIG. 9, in the embodiment, the cutting portion 400 is, for example, a cutter; the cutting portion 400 is mounted on the rotation axis 63, is driven by the outer rotor motor 310, and is transmitted by the transmission mechanism 60 to drive the cutting portion 400. In an embodiment, the cutting portion 400 is installed on the rotation axis 63, and a shaft shoulder 631 is provided on an end of the rotation axis 63, and an end surface of the rotation axis 63 installed with the cutting portion 400 is provided with a threaded hole 632, the threaded hole 632 is arranged along a axial direction of the rotation axis 63; the cutting portion 400 is provided with cutter fixing plates 42 on both sides, and the cutting portion 400 is connected with the rotation axis 63 through bolts 43. In some embodiments, a shaft sleeve is arranged between the rotation axis 63 and the cutter, the shaft sleeve is installed in cooperation with the rotation axis 63. and two step structures with different diameters are arranged on an outside of the shaft sleeve, so as to adapt to the two cutters with different inner hole diameters. In this embodiment, the shaft sleeve is arranged between the rotation axis and the cutter, and at the same time, the shaft sleeve also matches with a center hole of the cutter to install the cutter on the rotating axis, further there are two step structures with different diameters outside the shaft sleeve. Through the combination of the shaft sleeve and the rotation axis in positive and negative sides of the rotating axis, the cutters with different diameters of the central hole can be connected to the corresponding step structures, to achieve the matching with the two cutters.

As shown in FIG. 1 to FIG. 9, in the embodiment, the cutter fixing plate 42 includes a first fixing plate 421 and a second fixing plate 422. When installing the cutting portion 400, the first fixing plate 421 is sleeved on the rotating axis 63, then the cutting portion 400 is sleeved on the rotating axis 63, and finally the second fixing plate 422 is installed on the rotating axis 63, and the bolts 43 are used for fixing. The first fixing plate 421 is located between the shaft shoulder 631 and the cutting portion 400, and the bolt 43 is threadedly connected to the threaded hole 632 on the end surface of the rotating axis 63 to tightly connect the cutting portion 400 on the rotating axis 63, so that the cutting portion 400 can rotate with the rotation of the rotating axis 63, so that the cutting saw can obtain high torque cutting capability.

As shown in FIGS. 1 to 9, it should be noted that, in the embodiment, there is an angle between an axial direction of the transmission axis 62 and a bottom surface (i.e., a horizontal direction) of the power tool, to avoid the cutting portion 400 from contacting the ground or other placing platforms when placing the power tool, so as to avoid causing damage to the cutting portion 400.

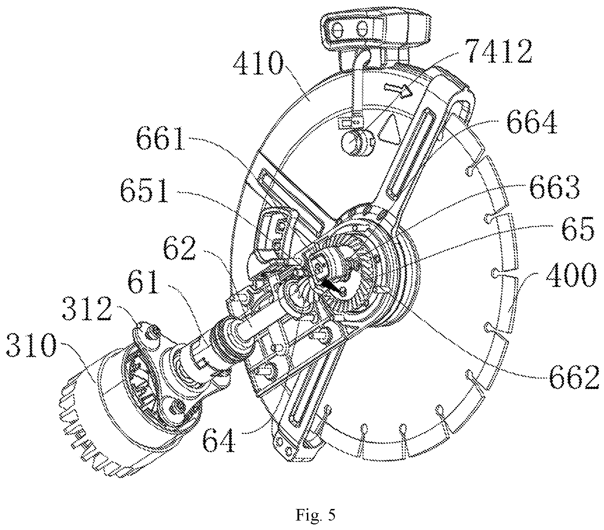

As shown in FIG. 5, FIG. 10 and FIG. 11, in the embodiment, a cutter limiting device 660 includes a limiting button 661, a limiting column 662 and a spring 663. The limiting button 661 is movably installed the cover 601, one end of the limiting column 662 is fixedly connected to the limiting button 661, the other end of the limiting column 662 is provided with a gasket 54. The spring 663 is sleeved on the limiting column 662, and is located between the limiting button 661 and the gasket 54. The driven bevel gear 65 is provided with a plurality of limit holes 651 matching the limiting column 662. When the cutting portion 400 needs to be assembled or disassembled, by pressing the limiting button 661, one end of the limiting column 662 extends into the limit hole 651, so as to realize a limit effect on the driven bevel gear 65, to lock the driven bevel gear 65, thereby locking the rotating axis 63, so as to facilitate the installation or removal of the cutting portion 400.

As shown in FIG. 1 to FIG. 11, in the embodiment, the cutting portion 400 also generates heat during the rotary cutting process, so that the cutting is in a high temperature state, and the cutting portion 400 in the high temperature state for a long time may cause damage to the cutter or to the object to be cut, so the cutting portion 400 needs to be cooled down. In the embodiment, a water outlet 7412 is installed on the blade guard 410, and the water outlet 7412 is connected to a cooling liquid supply main pipe 530. The cooling liquid supply main pipe 530 is arranged around the housing 100, and is connected with an external water source, so that when the cutting portion 400 rotates, the external water source flows along the cooling liquid supply main pipe 530, flows out from the water outlet 7412, and is sprayed on the cutting portion 400 to achieve a cooling effect on the cutting portion 400 and also play a role in lubricating the cutting process.

In addition, considering that the conventional cutting saw will produce a large amount of abrasive residues, when cutting wood, stone, steel, concrete, etc., such as: concrete residue, metal residue, wood chips, etc., if these abrasive residues are sucked into the interior of the cutting saw, it will cause damage to the motor, control circuit board, etc. located inside the cutting saw, and even cause the cutting saw to malfunction, making the cutting saw unable to use normally, so a dustproof structure needs to be set up. While the conventional dustproof cover adopts screws to be fasten connected with the body or the body is integrated with the dustproof cover, the disadvantage of such structure is that the air inlet is easy to be blocked by the dust, and it is difficult to clean the dust at the air inlet. However, if the dust at the air inlet is not cleaned or not cleaned thoroughly for a long time, it is easy to cause insufficient air intake and reduce the heat dissipation effect on the motor and control board, thereby overheating the motor and control board, which makes the cutting saw prone to machine failure, such as frequent protection or burning.

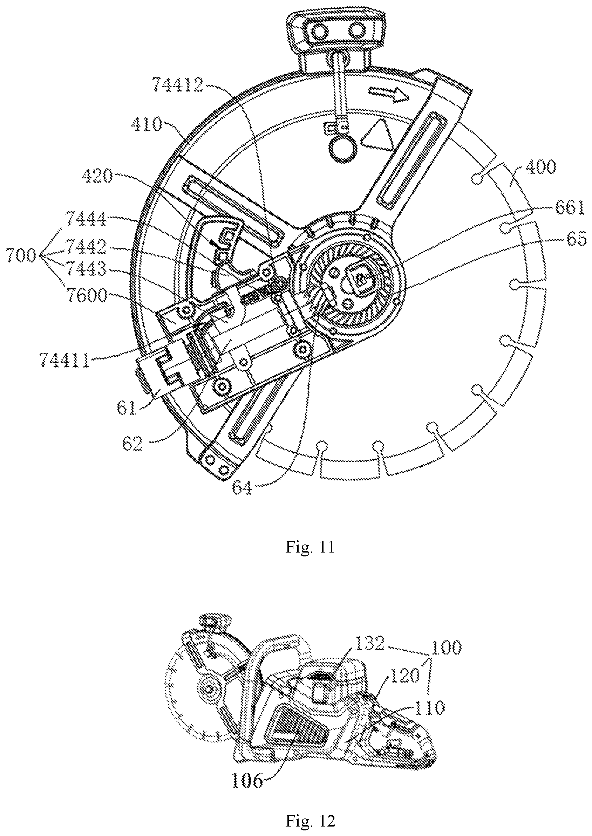

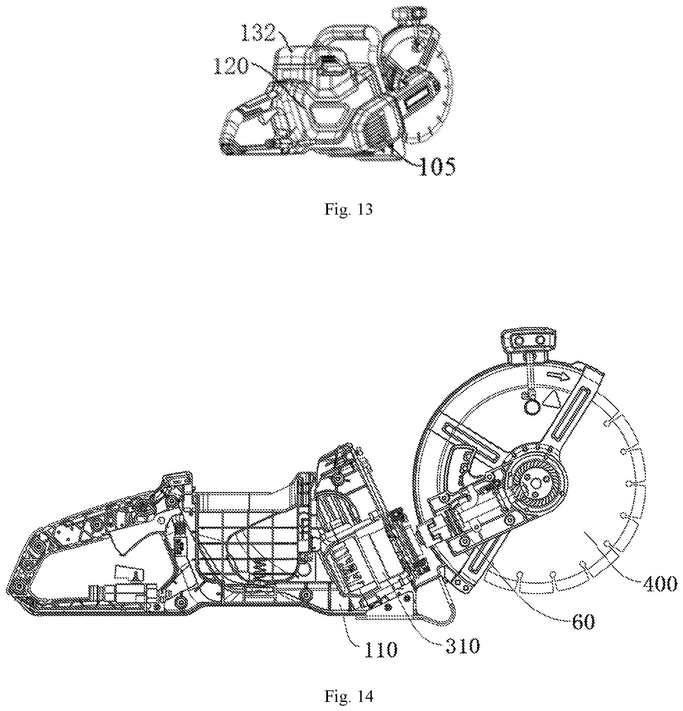

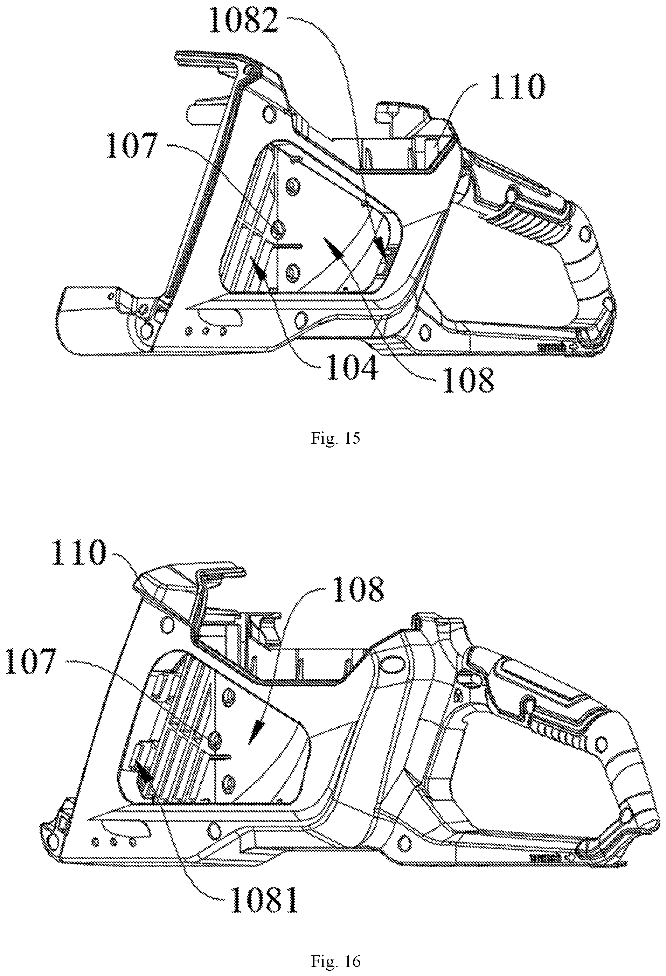

As shown in FIG. 12 to FIG. 17, in the embodiment, the housing 100 is further provided with an air inlet 104 and an air outlet 105. The air inlet 104 and the air outlet 105 are respectively arranged on two sides of the housing 100, and communicate with a motor accommodating cavity which is configured to hold the outer rotor motor 310 therein, so as to dissipate heat for the outer rotor motor 310. The air inlet 104 and the air outlet 105 are respectively arranged at on the first casing 110 and the second casing 120, it should be noted that the air inlet 104 and the air outlet 105 are both arranged in a grid structure.

As shown in FIG. 12 to FIG. 17, in the embodiment, a dustproof cover 106 is further provided on an outer side of the air inlet 104, and an air inlet channel is formed between the dustproof cover 106 and the housing 100. In addition, a plurality of magnetic attraction structures 107 are installed in the air inlet channel to absorb ferromagnetic dust in the cooling air. The dustproof cover 106 is detachably installed on the housing 100, and covers the top of the air inlet 104 to achieve the purpose of dust prevention.

As shown in FIGS. 12 to 17, in the embodiment, the housing 100 is provided with a dustproof cover mounting groove 108, and the air inlet 104 is located at a side of a bottom of the dustproof cover mounting groove 108. The dustproof cover 106 is installed on the dustproof cover mounting groove 108 to cover the air inlet 104. The opposite side walls of the dustproof cover mounting groove 108 are respectively provided with a plurality of first clamping grooves 1081 and a second clamping groove 1082 which are matched with the dustproof cover 106. One side of the dustproof cover 106 is provided with a plurality of buckles 1061, and the other side of the dustproof cover 106 is provided with at least one elastic buckle 1062, the plurality of the buckle 1061 is matched with the plurality of the first clamping grooves 1081, and the elastic buckle 1062 is matched with the second clamping groove 1082, so that the dustproof cover 106 can be detachably installed on the housing 100. The independent dustproof cover 106 is used, which can be manually disassembled and assembled without tools, and provides dust protection for the air inlet 104 of the cutting saw. The structure of manual disassembly is convenient for cleaning dust accumulation.

As shown in FIG. 12 to FIG. 17, in the embodiment, the air inlet channel is a channel formed between the bottom surface of the dustproof cover mounting groove 108 and the dustproof cover 106, and the plurality of magnetic attraction structures 107 is installed on the bottom surface of the dustproof cover mounting groove 108. In the embodiment, the magnetic attraction structure 107 is, for example, a magnet. In the embodiment, the dustproof cover 106 includes a shielding portion 1063 and an air inlet portion 1064. The shielding portion 1063 is located above the air inlet 104 to shield the air inlet 104. The air inlet portion 1064 is located on one side of the shielding portion 1063 and is in staggered arrangement with the air inlet 104. The air inlet portion 1064 is configured as a grid structure. The shielding portion 1063 is a sealing plane and cannot allow air to enter. Through holes are arranged between the grids of the air inlet portion 1064, and the through holes are arranged along the gaps of the grids to facilitate the entry of air.

As shown in FIG. 12 to FIG. 17, in the embodiment, the plurality of the magnetic attraction structures 107 are distributed along boundary lines of the shielding portion 1063 and the air inlet portion 1064 to absorb the ferromagnetic dust in the cooling air. The dustproof cover 106 and the housing 100 are detachable connected, one end thereof is engaged, and the other end is provided with an elastic buckle 1062, so that dustproof cover 106 can be manually disassembled by the operator, when the magnetic attraction structures 107 are adsorbed too much dust, the dustproof cover 106 can be removed for cleaning.

As shown in FIG. 12 to FIG. 17, in the embodiment, the outer rotor motor 310 is further provided with a cooling fan. When the outer rotor motor 310 rotates, the fan is started, so that the cooling airflow can enter from an air inlet portion 1064 of the dustproof cover 106, and enters the inside of the housing 100 from the air inlet 104 via the air inlet channel formed between the dustproof cover 106 and the housing 100, and then flows out from the air outlet 105 to achieve the cooling effect of the outer rotor motor 310. At the same time, the shielding portion 1063 on the dustproof cover 106 shields the air inlet 104 to prevent the airflow from directly entering inside the housing 100 from the air inlet 104 to achieve the purpose of dustproof. In the embodiment, the air inlet 104 is close to the front end of the housing 100, and the air inlet portion 1064 is located at the rear side of the air inlet 104. Therefore, when the airflow flowing into the air inlet portion 1064 from the cutting portion needs to be turned before entering inside the housing from the air inlet 104, so that the dust with a certain initial velocity cannot enter the air inlet 104. In the embodiment, the independent dustproof cover 106 is used, which can be manually disassembled and assembled without tools to protect the air inlet 104 of the power tool from dust. A manual disassembly and assembly structure is convenient for cleaning the dust.

By adopting the independent dustproof cover, the embodiments solve the problem that it is difficult to clean the dust at the air inlet, and the air inlet is insufficient due to incomplete cleaning, so that the motor and the control board are overheated, and the cutting saw is prone to frequent protection or burn-in during operation. The dustproof covers in the embodiments can be manually disassembled and assembled without tools, so as to protect the air inlet of the cutting saw from dust. A manual disassembly and assembly structure is convenient for cleaning the dust.

Most of the conventional hand-held cutting tools use high-power battery packs for power supply, and the battery packs are installed in a battery pack cavity on the housing. However, due to the high power of the battery pack used in the hand-held electric cutting saw, for example, the battery pack used by the cutting saw is 80V, 4AH and the power is 2000W, high temperature of the battery pack will shorten the battery life. Moreover, the battery pack of the conventional hand-held cutting tool is mostly exposed outside the housing of the hand-held cutting tool, which is easily polluted by dust and cooling liquid, resulting in failure or short circuit of the power supply system, so it is necessary to provide a cooling method for cutting tools and battery packs of cutting tools to solve the above problems.

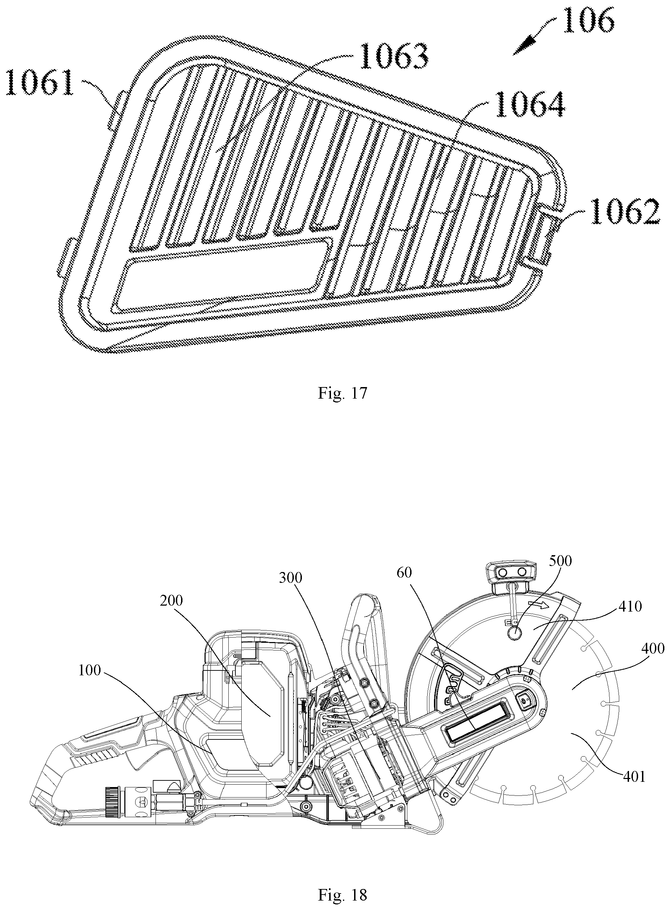

Please refer to FIGS. 18 to 22. The disclosure provides a cutting tool. The cutting tool seals the battery pack 210 in the battery pack cavity 130. This can effectively prevent the corrosion and pollution of the battery pack 210 by dust and cooling liquid. And through the corresponding communication relationship between the battery pack cavity air inlet 135 on the battery pack cavity 130, the battery pack cavity air outlet 136 on the battery pack cavity 130, and the battery pack heat dissipation hole on the battery pack 210, the air flow is forced to flow through gaps between the cells 213 in the battery pack 210, so that the diffused heat dissipation of the battery pack 210 is changed into the circulating air suction cooling, so that the heat dissipation state of the battery pack 210 can be improved. Thereby the problems that the battery pack 210 of the conventional cutting tool is exposed, easily polluted, and the cooling effect is poor can be improved.

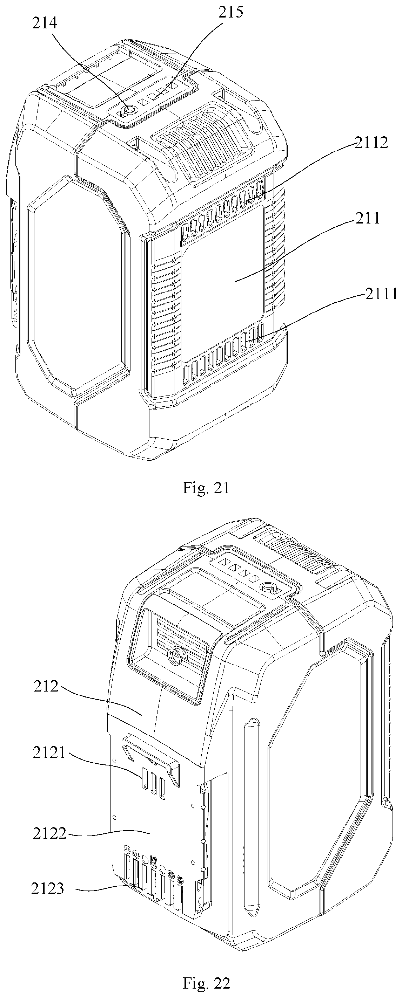

Please refer to FIGS. 18 to 20, the cutting tool of the disclosure includes a housing 100, a cutting portion 400, a driving portion 300 and a power supply portion 200. The driving portion 300 drives the cutting portion 400, the power supply portion 200 supplies power to the driving portion 300. The power supply portion 200 includes: a battery pack 210, a battery pack cavity air inlet 135, a battery pack cavity air outlet 136 and an air suction device (not shown). The housing 100 of the cutting tool is provided with a battery pack cavity 130 capable of accommodating the battery pack 210. The battery pack 210 is sealedly installed in the battery pack cavity 130 of the cutting tool. Please refer to FIGS. 21 and 22. The battery pack 210 is provided with a first heat dissipation portion 2111 and a second heat dissipation portion 2121, the first heat dissipation portion 2111 includes at least one first heat dissipation hole, and the second heat dissipation portion 2121 includes at least one second heat dissipation hole. In an embodiment, the first heat dissipation portion 2111 includes a plurality of the first heat dissipation holes arranged in parallel. The plurality of the first heat dissipation holes are arranged in a linear direction on a wall of the battery pack 210 and communicate with inner cavities of the cells 213 of the battery pack 210. The second heat dissipation portion 2121 includes three parallel second heat dissipation holes. The three second heat dissipation holes are arranged in a linear direction on the wall of the battery pack 210 and communicate with installation cavities of the cells 213 of the battery pack 210. The battery pack 210 is installed in the battery pack cavity 130 and is connected with other power devices of the cutting tool through electrical ports, so as to provide energy for other power devices of the cutting tool. The battery pack cavity air inlet 135 is disposed on the housing 100 of the cutting tool, and passes through the wall of the battery pack cavity 130 and communicates with at least one first heat dissipation hole in the first heat dissipation portion 2111. The battery pack cavity air outlet 136 is disposed on the wall of the battery pack cavity 130, and passes through the wall of the battery pack cavity 130 and communicates with at least one second heat dissipation hole in the second heat dissipation portion 2121. The air suction device is installed in the housing 100, and the air suction port of the air suction device is communicated with the battery pack cavity air outlet 136. The air suction device sucks the airflow from the battery pack cavity air outlet 136 into the motor accommodating cavity, and finally exhausts the airflow to the outside of the housing 100 of the cutting tool through the air outlet 105 provided on the side of the housing 100. In one embodiment of the disclosure, a filter structure (not shown) is installed on the battery pack cavity air inlet 135, and the filter structure can filter the incoming airflow to prevent dust from entering the battery pack 210.

It can be seen from the above structure that in the disclosure, the battery pack cavity air inlet 135 is communicated with at least one first heat dissipation hole in the first heat dissipation portion 2111, and the battery pack cavity air outlet 136 is communicated with at least one second heat dissipation hole in the second heat dissipation portion 2121. When the air pressure on the side of the battery pack cavity air outlet 136 is lower than the air pressure on the side of the battery pack cavity air inlet 135 under an action of the air suction device, the airflow enters the battery pack cavity air inlet 135, and passes through the first heat dissipation hole to enter into the installation cavity of the cells 213 of the battery pack 210, and further flows through the gaps between the cells 213 to reach the battery pack cavity air outlet 136, and finally is discharged from the battery pack cavity air outlet 136. It can be seen that the cooling structure of the battery pack 210 of the cutting tool of the disclosure can change the diffusion heating of the battery pack 210 into a circulating air suction cooling, thereby improving the heat dissipation state of the battery pack 210.

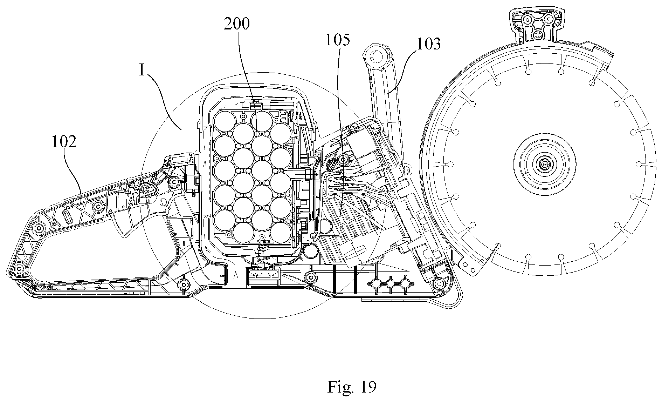

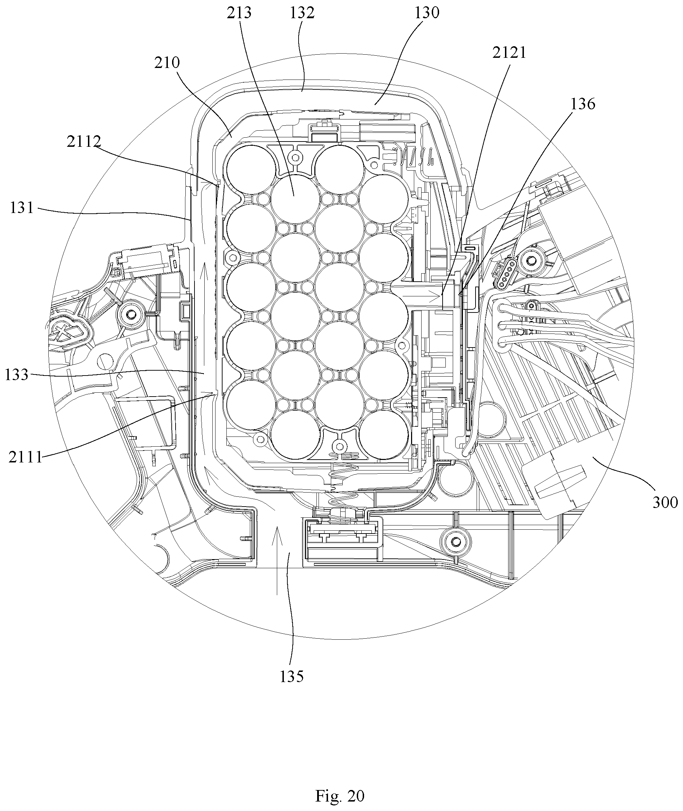

Referring to FIG. 19 and FIG. 20, considering that the dust and cooling liquid fall from top to bottom under the action of gravity, in one embodiment of the disclosure, the battery pack cavity air inlet 135 is disposed at a bottom of the battery pack cavity 130. It can prevent dust and cooling liquid from entering into the battery pack cavity air inlet 135 during the falling process.

The configuration of the air suction device in the disclosure is not limited, as long as it can suck from the battery pack cavity air outlet 136 and can generate airflow between the battery pack cavity air inlet 135 and the battery pack cavity air outlet 136 to meet the cooling requirements of the disclosure for the battery pack 210. The air suction device can also be set independently. In an embodiment of the disclosure, the air suction device is a fan installed on a motor shaft of a motor of the cutting tool, and the suction side of the fan faces the battery pack cavity air outlet 136, the blowing side of the fan faces the air outlet 105 on the housing 100.

Referring to FIG. 19, in order to maintain the balance of the entire handheld cutting tool, in one embodiment of the disclosure, the battery pack cavity 130 is disposed behind the motor of the cutting tool and between a first handle 102 and a second handle 103. In this way, the heavier battery pack 210 can be matched and balanced with the cantilevered cutting head on the other side of the motor.

Referring to FIGS. 19 and 20, the installation method of the battery pack 210 in the battery pack cavity 130 in the disclosure is not limited. In an embodiment of the disclosure, the battery pack 210 is detachably connected to the battery pack cavity 130. The detachable installation can achieve a replacement of the battery pack 210 after the battery pack 210 is damaged.

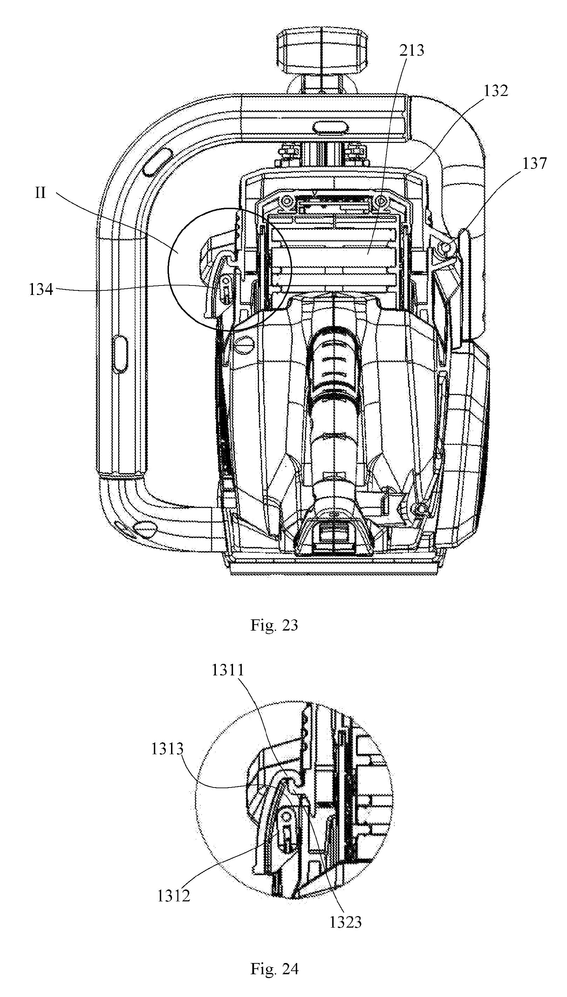

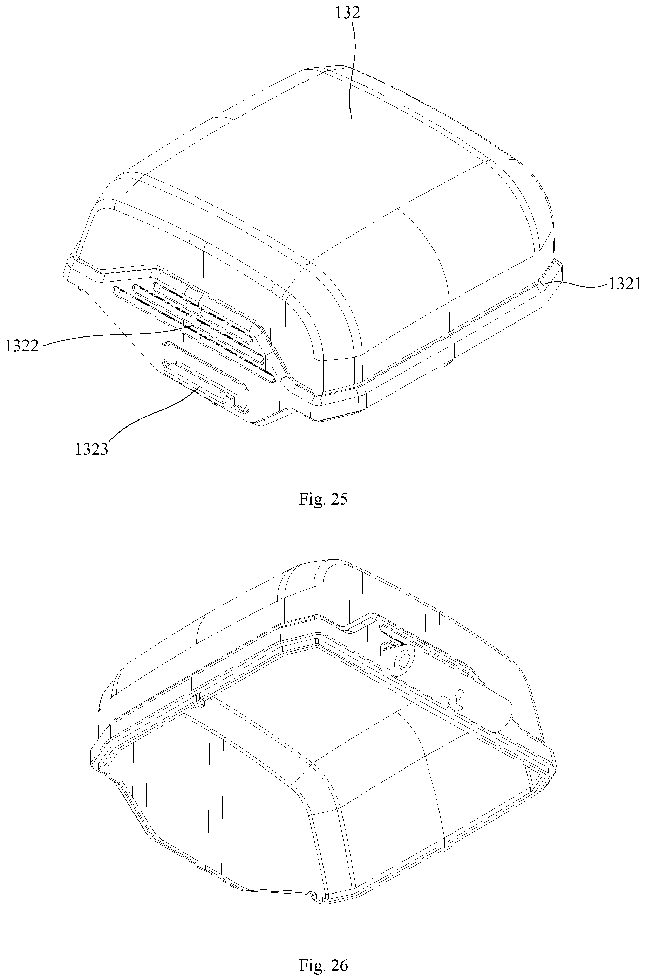

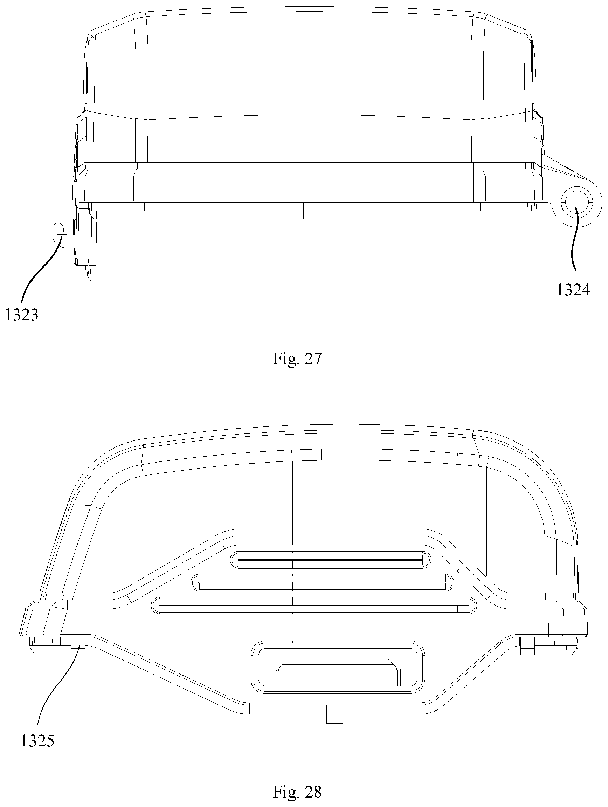

Referring to FIGS. 23 to 28, in the disclosure, the structure of the battery pack cavity 130 is not limited. In one embodiment of the disclosure, the battery pack cavity 130 includes a battery holder 131 and a cover body 132, and the battery pack 210 is vertically inserted downward into the battery pack cavity 130, and the cover body 132 is sealed and installed on an opening of the battery holder 131. Considering that the top of the conventional battery pack 210 is provided with a battery button 214 and a power display module 215, in an embodiment of the disclosure, a transparent structure is provided on the cover body 132 to facilitate the observation of the state of the battery pack 210. The transparent structure can be mainly made of transparent plastic with better anti-wear and anti-drop effect. In order to facilitate the sealing between the cover body 132 and the battery holder 131, in an embodiment of the disclosure, a coating structure 1321 is provided on an interface on the cover body 132 and the battery holder 131. The coating structure 1321 surrounds along an opening of the cover body 132, and directly matches with an upper opening of the battery holder 131, which can effectively improve the sealing state of the battery pack cavity 130. The coating structure 1321 is provided with an anti-skid structure 1322. The anti-skid structure 1322 is a plurality of protrusions or grooves disposed on the coating structure 1321. The plurality of the protrusions or grooves are arranged in parallel and extend in a linear direction. In the disclosure, the detachable installation method of the cover body 132 on the battery holder 131 can be various structures, such as the commonly used buckle form of the conventional sealed fuse box. In an embodiment of the disclosure, a buckle structure is arranged between the cover body 132 and the battery holder 131, and the buckle structure can also be any conventional suitable buckle, such as the claws 1325 provided on the cover body 132, the claws 1325 can be inserted into the battery holder 131. When the claws 1325 are inserted into the battery holder 131, the claw 1325 is elastically deformed under a guidance of a wedge-shaped guide surface, and is clamped on a stop structure provided in the battery holder 131. Considering the wide application of the buckle, the specific structure of the buckle in the disclosure will not be described in detail.

In the disclosure, a height of a matching surface between the battery holder 131 and the cover body 132 may not be limited. In an embodiment of the disclosure, the matching surface between the cover body 132 and the battery holder 131 is higher than a top surface of the housing 100 of the cutting tool during normal operation. In the embodiment, the splashed cooling liquid will not collect at the opening of the battery holder 131, which can prevent the cooling liquid from entering the battery pack cavity 130, thereby causing circuit failure.

Referring to FIGS. 23 and 24, in one embodiment of the disclosure, a pin shaft through-hole 1324 is provided on one side of the cover body 132, and the pin shaft through-hole 1324 is rotatably connected to one side of the battery holder 131 through a pin shaft 137, the other side of the cover body 132 and the other side of the battery holder 131 are locked by a locking structure 134. The locking structure 134 includes a first hooking body 1323, a second hooking body 1311 and a connecting arm 1312. The first hooking body 1323 is installed on the cover body 132 and is provided with a first hook head, and the battery holder 131 is provided with a bracket 1313, one end of the connecting arm 1312 is rotatably mounted on the bracket 1313, one end of the second hooking body 1311 intersects with the other end of the connecting arm 1312, and one end of the second hooking body 1311 away from the connecting arm 1312 is provided with a second hook head. The second hook head is matched with the first hook head. On the one hand, this structure can ensure the tightness sealing between the cover body 132 and the battery holder 131, and on the other hand, when the cover body 132 is opened, the cover body 132 can be suspended to the side of the opening of the battery holder 131, without considering the placement of the cover body 132.

Referring to FIG. 20, in an embodiment of the disclosure, the battery pack 210 is further provided with a third heat dissipation portion 2112, and the battery pack cavity air inlet 135 is communicated with at least one third heat dissipation hole in the third heat dissipation portion 2112. The first heat dissipation portion 2111 and the third heat dissipation portion 2112 are arranged on a first side wall 211 of the battery pack 210, and a cooling air channel 133 is arranged between the first side wall 211 and the wall of the battery pack cavity 130, and the cooling air channel 133 is communicated with the battery pack cavity air inlet 135. In one embodiment of the disclosure, the second heat dissipation portion 2121 is disposed on a second side wall 212 opposite to the first side wall 211, and the second side wall 212 is disposed on a side facing the motor of the cutting tool. A positioning matching structure is provided between the second side wall 212 and the side wall of the battery pack cavity 130, and a positioning surface 2122 is provided on the second side wall 212. The positioning surface 2122 is tightly abutted an inner wall of the battery holder 131, and the battery pack cavity air outlet 136 is flush with the second heat dissipation hole. In an embodiment of the disclosure, the power receiving terminal 2123 of the battery pack 210 is disposed on the second side wall 212 and is located below the second heat dissipation hole.

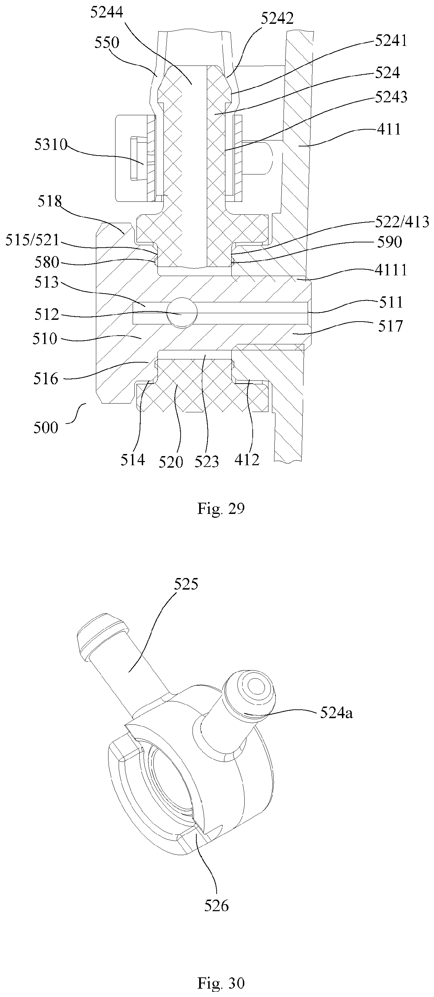

Referring Figure 29 to Figure 32, in an embodiment of the disclosure, the cutting tool further includes a spraying cooling portion, and the cutting tool can also improve the situations of poor sealing of the spraying head and complicated installation of the conventional cutting tool. The connecting rod 517 of the spraying cooling portion of the cutting tool of the disclosure is in a directly threaded connection with a connecting through hole 4111 of the guard side wall 411, and a sealing of the openings at both ends of a liquid storage cavity 523 is realized by an axial force of the threaded connection. The sealing area is relatively small, the spraying cooling portion is relatively simple, so that sealing safety is high and the installation is more convenient.

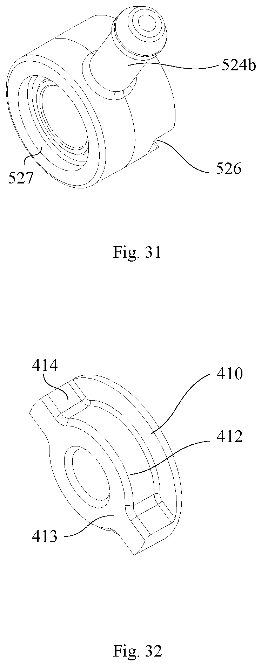

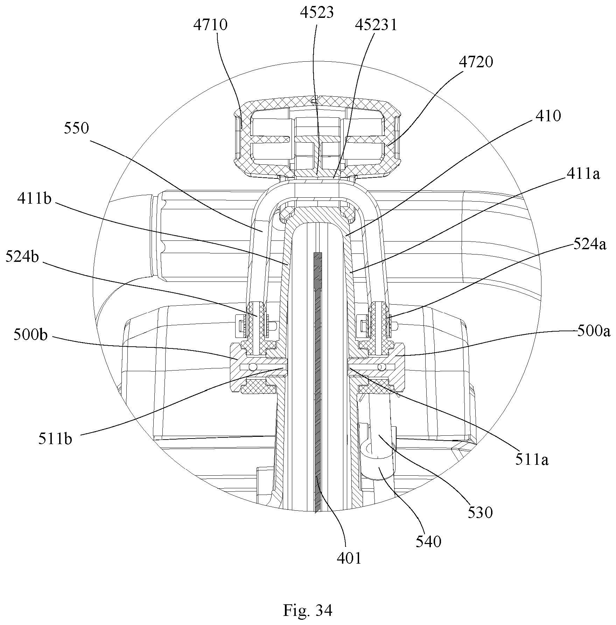

Referring to FIGS. 18 and 34, the spraying cooling portion of the cutting tool of an embodiment of the disclosure includes: a blade guard 410, a spraying head 510 and an adapter 520. The blade guard 410 is provided on an outer side of a cutter 401 to prevent the operator from being injured by touching the cutter 401 during operation. The guard side wall 411 is provided with a connecting through hole 4111, and the connecting through hole 4111 penetrates the guard side wall 411. A penetrating direction of the connecting through hole 4111 can be parallel to an extending direction of a rotating shaft of the cutter 401, or the penetrating direction can be slightly inclined as required, so as to spray the cooling liquid to a designated position on a surface of the cutter 401. The spraying head 510 is provided with a cantilevered connecting rod 517, one end of the connecting rod 517 is provided with a block 516, the other end of the connecting rod 517 is provided with a spray port 511, and a side wall of the connecting rod 517 is provided with at least one liquid inlet 512, and the liquid inlet 512 is communicated with the spray port 511. It should be noted that in the disclosure, the communication structure, inside the connecting rod 517, between the liquid inlet 512 on the connecting rod 517 and the spray port 511 is not limited. In an embodiment of the disclosure, a channel 513 extending along the axis of the connecting rod 517 is provided inside the connecting rod 517, one end of the channel 513 penetrates an end face of the cantilevered end of the connecting rod 517 to form the spray port 511, the liquid inlet 512 is provided with at least one, and the liquid inlet 512 penetrates a side wall of the connecting rod 517 along a radial direction of the connecting rod 517 and communicates with the channel 513. This setting structure is convenient for manufacturing and processing. It should be noted that, in the disclosure, the arrangement of the flow passages in the connecting rod 517 can also be any other suitable means, and is not limited to the above arrangement. The adapter 520 is provided with at least one pipe joint 524, the adapter 520 is provided with the liquid storage cavity 523 therethrough, and a flow channel opening 5244 of the at least one pipe joint 524 communicates with the liquid storage cavity 523. The number of pipe joints 524 can be set as required, please refer to FIG. 30, in one embodiment of the disclosure, the adapter 520 on one side of the guard side wall of the cutter 401 needs to be connected with the cooling liquid supply main pipe 530 and a branch pipe 550 branching to the spraying head 510 on the other side at the same time. Two pipe joints 524 are provided thereon, a main pipe joint 525 and a first pipe joint 524a respectively. Please refer to FIG. 29 and FIG. 31, the adapter 520 on the other side wall of the guard side wall 411 of the cutter 401 only needs to be connected with a branch pipe 550, so only one pipe joint 524 is provided thereon, and the pipe joint 524 is a second pipe joint 524b. Of course, if more spray points need to be set, three or more pipe joints 524 may also be provided, which will not be exemplified here. In the above structure, one end of the connecting rod 517 provided with the spray port 511 passes through the liquid storage cavity 523 and is threadedly connected to the connecting through hole 4111, and the block 516 is sealed and blocked on one opening end of the liquid storage cavity 523 under an action of an axial force of the threaded connection. The block 516 abuts tightly against the adapter 520 to squeeze the guard side wall 411, and the guard side wall 411 is sealed on the other opening end of the liquid storage cavity 523. The liquid storage cavity 523 communicates with the liquid inlet 512.

Please continue to refer to FIG. 29, in the disclosure, as long as the sealing of the block 516 on the opening of the liquid storage cavity 523 of the adapter 520 can be achieved under the action of the axial force of the threaded connection, the sealing structure between the block 516 and the adapter 520 is not be limited. Considering that sealing on the end surface has more obvious advantages under the action of the axial force, in an embodiment of the disclosure, a first sealing structure is provided between the block 516 and the adapter 520. The first sealing structure includes a first adapter sealing surface 521 provided on the adapter 520, a first sealing surface 515 provided on the block 516, and at least one first sealing body 580 between the first adapter sealing surface 521 and the first sealing surface 515. As long as the sealing of the block 516 on the end surface of the opening of the liquid storage cavity 523 can be achieved, the position and structure of the first sealing surface 515 on the block 516 in the disclosure are not limited. In an embodiment of the disclosure, a first boss 514 is provided on a side of the block 516 facing the connecting rod 517, and the first sealing surface 515 is provided on an end surface of the first boss 514. The first adapter sealing surface 521 is recessed into the liquid storage cavity 523 of the adapter 520. This arrangement can reduce the contact of the first sealing body 580 with dust and air, and can make the sealing more reliable. In an embodiment of the disclosure, an outer surface of the first boss 514 is a first cylindrical surface, and the corresponding side wall at a first opening of the liquid storage cavity 523 is a second cylindrical surface 527. The first cylindrical surface and the second cylindrical surface 527 is coaxially disposed and maintains a certain gap therebetween to form a gap sealing between the first cylindrical surface and the second cylindrical surface 527. In an embodiment of the disclosure, the block 516 is provided with a dust-proof rib 518. A gap is formed between the dust-proof rib 518 and an outer end surface of the adapter 520, and the gap is communicated with the gap between the first cylindrical surface and the second cylindrical surface 527, which can increase a distance of gap sealing and can enhance the dust blocking effect.

In the disclosure, as long as the sealing of the guard side wall 411 on an end of the liquid storage cavity 523 of the adapter 520 under the action of the axial force of the threaded connection can be achieved, the sealing structure between the guard side wall 411 and the adapter 520 is not be limited. Please continue to refer to FIG. 29. In an embodiment of the disclosure, a second sealing structure is provided between the guard side wall 411 and the adapter 520. The second sealing structure includes a second adapter sealing surface 522 provided on the adapter 520, and a second sealing surface 413 provided on the guard side wall 411 at least one second sealing body 590 between the second adapter sealing surface 522 and second sealing surface 413. A second boss 412 is provided on the guard side wall 411, and the second sealing surface 413 is set on an end surface of the second boss 412. The second adapter sealing surface 522 is recessed into the liquid storage cavity 523 of the adapter 520. This arrangement can not only improve the sealing instability caused by the unevenness of the guard side wall 411, but also reduce the contact of the second sealing body 590 with dust and air. In an embodiment of the disclosure, an outer surface of the second boss 412 is a third cylindrical surface, and the corresponding side wall at a second opening of the liquid storage cavity 523 is a fourth cylindrical surface. The third cylindrical surface and the four cylindrical surfaces are coaxially arranged and maintain a certain gap therebetween to form a gap sealing between the third cylindrical surface and the fourth cylindrical surface. In an embodiment of the disclosure, a gap is formed between an end surface of the adapter 520 facing the guard side wall 411 and the guard side wall 411, and the gap is communicated with the gap between the third cylindrical surface and the fourth cylindrical surface, which can increase the distance of the gap sealing and enhance the dust blocking effect.

In the disclosure, the structure and material of the first sealing body 580 and/or the second sealing body 590 are not limited, and can be any suitable sealing body, for example, the first sealing body 580 and/or the second sealing body 590 can be conventionally arranged forms such as silicone gaskets, rubber gaskets, etc., in one embodiment of the disclosure, the first sealing body 580 and the second sealing body 590 are O-rings. The first sealing surface 515 and/or the first adapter sealing surface 521 is provided with a first groove for installing the O-ring, the second sealing surface 413 and/or the second adapter sealing surface 522 is provided with a second groove for installing the O-ring, the shapes and sizes of the first groove and the second groove are the same as the corresponding O-rings. The O-rings are installed in the first groove and the second groove respectively, and form an end surface seal under an action of extrusion force.

Please continue to refer to FIG. 29, considering the simplicity of installation, in an embodiment of the disclosure, the adapter 520 is made of plastic material. The first sealing body 580 is configured as at least one protruding structure disposed on the first adapter sealing surface 521, the second sealing body 590 is configured as at least one protruding structure the on the second adapter sealing surface 522. The protruding structures surrounds an outside of the opening of the liquid storage chamber 523 and are integrally formed with the adapter 520. The first sealing body 580 / the second sealing body 590 and adapter 520 can be made into an integral structure, and the sealing can be realized by the compression deformation of the protruding structures, so that there is no need to install additional sealing members.

Please continue to refer to FIG. 29. In the disclosure, the connection structure between the liquid inlet 512 and the liquid storage cavity 523 is not limited. For example, a groove along the circumference can be provided on the connecting rod 517 corresponding to the liquid inlet 512, to reduce the dislocation of the liquid inlet 512 and an opening of the inner flow channel of the pipe joint 524 caused by the rotation of the connecting rod 517. In an embodiment of the disclosure, there is a gap between an outer wall of the connecting rod 517 and an inner wall of the liquid storage cavity 523. The gap surrounds the outer wall of the connecting rod 517. This structure can not only solve the problem of misalignment between the liquid inlet 512 and the opening of the inner flow channel in the pipe joint 524 caused by the rotation of the connecting rod 517, but also eliminates the need to slot the connecting rod 517, which is convenient for production and manufacturing. In order to reduce the pressure loss, in an embodiment of the disclosure, the liquid storage cavity 523 and the connecting rod 517 are both cylindrical and coaxially arranged.

Please continue to refer to FIG. 29. In the disclosure, as long as the reliable connection with the pipes can be achieved, the structure of the pipe joint 524 on the adapter 520 may not be limited. In an embodiment, the branch pipe 550 and the cooling liquid supply main pipe are all hoses. A radially protruding portion 5241 is provided in the circumferential direction of the pipe joint 524. The protruding portion 5241 has a guide taper surface 5242, and a small end of the guide taper surface 5242 faces away from the liquid storage cavity 523. When the pipe is installed, the pipe can be gradually sleeved on the pipe joint 524 along the guide taper surface 5242. In order to increase the reliability of the connection, in an embodiment of the disclosure, a cylindrical section 5243 is provided on a side of the protruding portion 5241 facing the liquid storage cavity 523, and the hose is sheathed to the outside of the cylindrical section 5243 and clamped by a clamp hoop 5310 on the cylindrical section 5243, this structure can increase the reliability of the pipe installation.

Please continue to refer to FIG. 32, considering the positional accuracy of the pipe joint 524 of the adapter 520 on the guard side wall 411, in one embodiment of the disclosure, a positioning structure is provided between the second boss 412 of the guard side wall 411 and the adapter 520. The positioning structure can adopt all suitable structures that can realize positioning and installing the adapter 520 on the second boss 412. In an embodiment of the disclosure, the second boss 412 is provided with a positioning protrusion 414, and the adapter 520 is provided with a positioning groove 526 matched with the positioning protrusion 414. The positioning protrusion 414 are clamped in the positioning groove 526 for positioning.

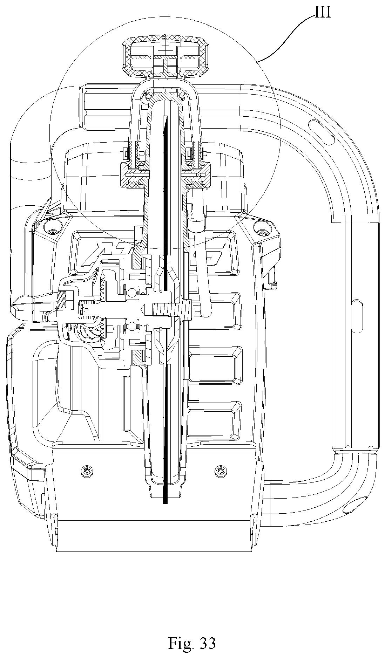

Please refer to FIGS 33 to 37, in another embodiment of the cutting tool of the disclosure, the blade guard 410 has a first guard side wall 411a and a second guard side wall 411b, the first guard side wall 411a and the second guard side wall 411b are respectively disposed on two sides of the cutter 401 along the extending direction of the rotating shaft, the first spraying head 510a is installed on the first guard side wall 411a, and the second spraying head 510b is installed on the second guard side wall 411b, the first spraying head 510a is installed on the first guard side wall 411a through the first spray cooling part 500a, and the second spraying head 510b is installed on the second guard side wall 411b through the second spray cooling part 500b. on the second side wall 411b. The first spray cooling part 500a and the second spray cooling part 500b are both spraying cooling portions of the disclosure.

Considering the connection requirements of the cooling liquid supply main pipe and the branch pipe, in an embodiment of the disclosure, two pipe joints 524 are provided on the adapter 520 of the first spray cooling part 500a, the two pipe joints 524 are the first pipe joint 524a and the main pipe joint 525 respectively. The main pipe joint 525 is connected with the cooling liquid supply main pipe 530, the first pipe joint 524a is connected with one end of the branch pipe 550, and the other end of the branch pipe 550 is connected with the second spray cooling part 500b on the pipe joint 524b.

Referring to FIG. 34, in order to facilitate maintenance, in an embodiment of the disclosure, the branch pipe 550 is a hose, an edge of the blade guard 410 is provided with a limit perforation 45231, and one end of the branch pipe 550 is installed on the pipe joint 524 of the first spray cooling part 500a, the other end of the branch pipe 550 passes through the limit perforation 45231 and is installed on the pipe joint 524 of the second spray cooling part 500b. The branch pipe 550 outside the limit perforation 45231 is exposed to the outside. When the branch pipe 550 needs to be removed, just pull out one end of the branch pipe 550, and then pull the branch pipe 550 out from the limit perforation 45231 to remove it. When the branch pipe 550 needs to be replaced, a new branch pipe 550 is inserted into the limit perforation 45231, and then the two ends thereof are respectively connected to the corresponding pipe joints 524 of the first spray cooling part 500a and the second spray cooling part 500b, and the operation is simple and fast, no professional required.

As long as the cutting is not affected, the limit perforation 45231 in the disclosure can be set at any edge position on the blade guard 410. Please refer to FIG. 34 to FIG. 35, in an embodiment of the disclosure, for the convenience of processing, the limit perforation 45231 is provided on a mounting seat of an adjustment handle 470 of the blade guard 410. In one embodiment of the disclosure, the adjustment handle 470 includes a first handle body 4710 and a second handle body 4720 respectively installed on two sides of the adjustment handle mounting seat 4523. The positions of the first handle body 4710 and a second handle body 4720 corresponding to the limit perforation 45231 are provided with through holes, one end of the branch pipe 550 is connected with the pipe joint 524 of the first spray cooling part 500a, and the other end of the branch pipe 550 passes through the through holes on the first handle body 4710, the limit perforation 45231 on adjustment handle mounting seat 4523, and the through holes on the second handle body 4720 in turn and then is connected to the pipe joint 524 of the second spray cooling part 500b.

In order to facilitate maintenance and operation, in an embodiment of the disclosure, the first spray cooling part 500a is located on the side of the blade guard 410 away from the transmission mechanism 60, and the cooling liquid supply main pipe 530 is wound along the housing 100of the cutting tool to a side of the blade guard 410 away from the transmission mechanism 60 and is connected with a pipe joint of the first spray cooling part 500a.

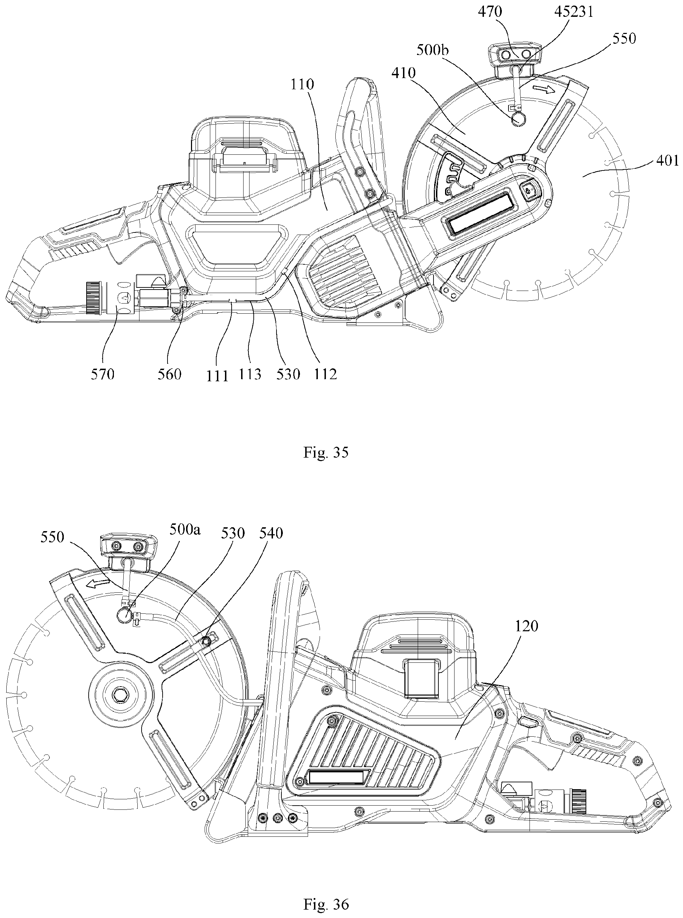

Referring to FIG. 35, in an embodiment of the disclosure, the housing 100 of the cutting tool is provided with an installation groove 113, and the cooling liquid supply main pipe 530 is installed in the installation groove 113. This arrangement can effectively protect the cooling liquid supply main pipe 530 and can beautify the appearance.

Referring to FIG. 35, in the disclosure, the installation of the cooling liquid supply main pipe 530 in the installation groove 113 can be in various forms, such as bonding, binding, etc. In one embodiment of the disclosure, at least one first baffle 111 is installed on one side of an opening of the installation groove 113, and at least one second baffle 112 is installed on the other side of the opening of the installation groove 113. The first baffle 111 and the second baffle 112 are staggered and extends hanging out towards an opposite side of the opening of the installation groove 113. The cooling liquid supply main pipe 530 is clamped in the installation groove 113 by the first baffle 111 and the second baffle 112 on two sides of the opening of the installation groove 113.

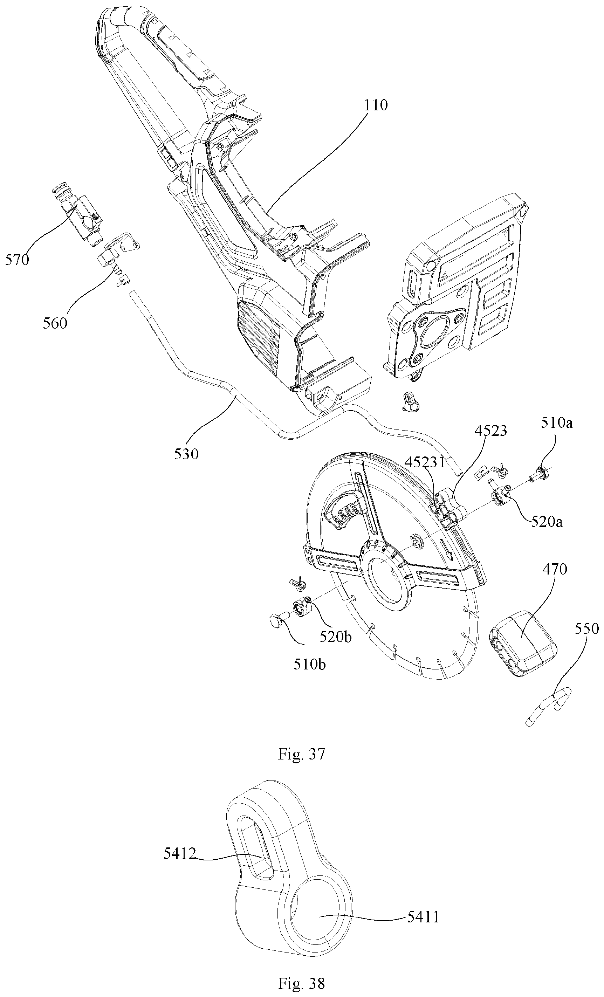

Please refer to FIG. 38. FIG. 38 is a schematic structural diagram of a pipe clamp in an embodiment of the cutting tool of the disclosure. In order to prevent the cooling liquid supply main pipe 530 from shaking on the side of the blade guard 410 and limit the cooling liquid supply main pipe 530, in an embodiment of the disclosure, a pipe clamp 540 is installed on the blade guard 410, and a pipe through hole 5411 is provided on the pipe clamp 540, the cooling liquid supply main pipe 530 passes through the pipe through hole 5411 and is connected to the pipe joint 524. The installation of the pipe clamp 540 on the blade guard 410 in the disclosure is not limited, and can be any suitable fixing method. In an embodiment of the disclosure, the blade guard 410 is provided with a threaded hole, and an elongated hole 5412 is provided on the pipe clamp 540, and a fixing bolt passes through the elongated hole 5412 and is connected with the threaded hole, so as to connect the pipe clamp 540 on the blade guard 410 tightly.

In an embodiment of the disclosure, a valve 560 is provided on the cooling liquid supply main pipe 530, and a quick connector 570 is provided at one end of the cooling liquid supply main pipe 530 away from the spraying head 510, and the quick connector 570 is fixedly installed the housing 100 of the cutting tool and can be easily connected with external cooling liquid supply pipes. It should be noted that when the cooling liquid is water, the cutting tool of the disclosure can be connected to a water supply port of a tap water supply pipe or other water supply device through the quick connector 570, and the tap water supply pipe or other water supply device is an external structure, which will not be described in detail here.

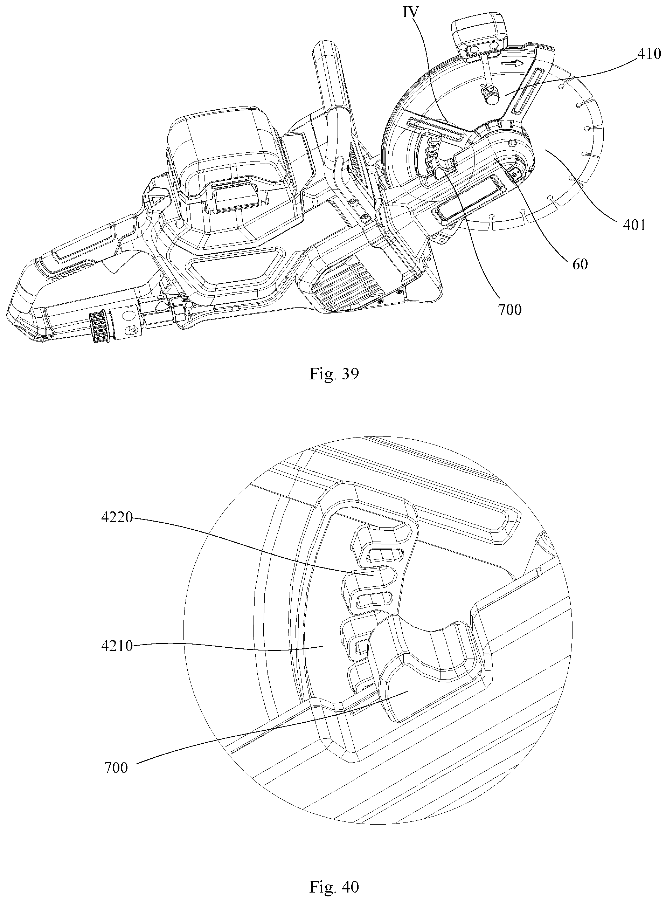

Referring to FIGS. 39 to 46, in consideration of the convenience of adjusting the blade guard of the cutting tool, in one embodiment of the disclosure, the cutting tool further includes a guard adjustment assembly. The guard adjustment assembly has a relatively small adjustment resistance and a relatively large limiting force, which can improve a problem of inconvenient adjustment of the blade guard 410 of the conventional cutting tool.

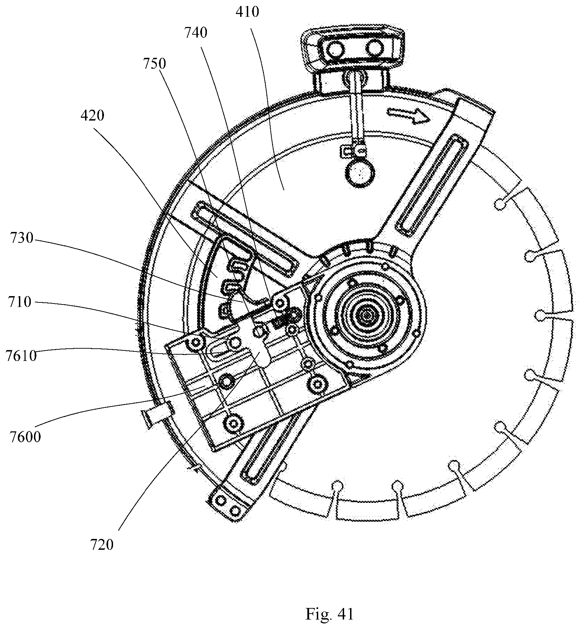

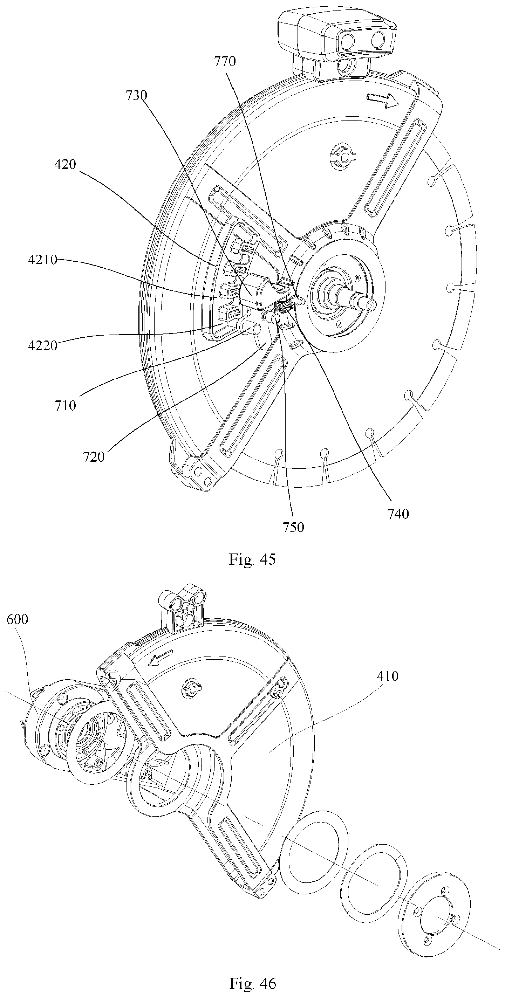

Referring to FIG. 39 to FIG. 40, the guard adjustment assembly of the cutting tool includes a blade guard 410, a guard adjustment mechanism 700 and an adjustment track groove 420. The blade guard 410 is partially covered outside the cutter 401 and exposes the cutting portion 400 of the cutter 401 to the outside of the blade guard 410. The blade guard 410 is rotatably mounted on two sides of the housing 100 of the cutter 401 and rotatable angle range of the blade guard 410 should cover a set adjustment angle range of the blade guard 410, and can be rotated at least within the set adjustment angle range. Referring to FIG. 46, in one embodiment of the disclosure, the blade guard 410 is coaxially installed outside the cutter 401, and is installed on the shell of the transmission mechanism 60 by means of press fitting, which can rotate about a rotation axis of the cutter 401 without other entanglements. Please refer to FIG. 41, the guard adjustment mechanism 700 is installed on the housing 100 on the side of the blade guard 410, and the guard adjustment mechanism 700 is provided with a slider 710, and the slider 710 can reciprocate along an extending direction of a first straight line under an action of external force. The adjustment track groove 420 is disposed on the outer wall of the blade guard 410 on one side of the slider 710 and faces the slider 710. The adjustment track groove 420 is provided with an arc-shaped track groove 4210 and a plurality of limiting grooves 4220. The arc-shaped track groove 4210 is coaxial with the rotating shaft of the blade guard 410. The plurality of limiting grooves 4220 are arranged on one side of the arc-shaped track groove 4210 and communicate with the arc-shaped track groove 4210. Each limiting groove 4220 extends in a linear direction. When each limiting groove 4220 rotates to reach the position of the slider 710, the corresponding extending linear direction coincides with the first straight line. The slider 710 is inserted into the adjustment track groove, and reciprocates between the arc-shaped track groove 4210 and corresponding limiting groove 4220 in a reciprocating movement along the first straight line.

Please refer to FIGS. 41 to 44, the installation of the slider 710 in the disclosure is not limited, as long as it can move in a straight line and reciprocate between the arc-shaped track groove 4210 and one of the limit grooves 4220. In one embodiment of the disclosure, the guard adjustment mechanism 700 is installed inside transmission mechanism 60 of the cutting tool. Considering the convenience of operation and the limitation of the installation position, the guard adjustment mechanism 700 includes a slider mounting seat 720, and the slider mounting seat 720 is provided with a first mounting hole 721, the slider 710 is mounted in the first mounting hole 721. The housing 100 of the cutting tool is provided with a track through hole, and the extension direction of the track through hole is parallel to the first straight line, the slider mounting seat 720 is inserted into the track through hole, a part of the slider mounting seat 720 exposed to the outside of the housing 100 of the cutting tool is provided with a third mounting hole 723, and a first screw 760 passes through the third mounting hole 723 and are connected to the operation portion 730. When the operation portion 730 is translated, the operation portion 730 drives the slider mounting base 720 to move linearly along the extending direction of the track through hole. In this structure, the operation portion 730 is exposed to the outside of the housing 100 and can be operated with one hand. In order to facilitate finger to hook, in an embodiment of the disclosure, an arc-shaped operation surface 731 is provided on the operating portion 730 to facilitate finger to hook, which is beneficial to the stability of the operation. In order to facilitate disassembly and assembly, in an embodiment of the disclosure, the operation portion 730 is detachably installed on the slider mounting seat 720 through the first screw 760.

Referring to FIG. 41, considering that the cutting tool vibrates greatly during operation, in order to ensure the stability of the slider 710 in the limiting groove 4220, in an embodiment of the disclosure, a slider anti-disengaging device 740 is provided in the guard adjustment mechanism 700, the slider anti-disengaging device 740 is configured to make the slider 710 stable and reliable in the limiting groove 4220, and will not move along the limiting groove 4220 to the side of the arc-shaped track groove 4210 under the condition of vibration, to prevent the slider 710 from shifting under vibration. The slider anti-disengaging device 740 in the disclosure can be any suitable structure to prevent the slider 710 from being translated and displaced, such as a positioning pin that can be inserted into the slider 710 or any member that can exert a certain pressure on the slider 710 to make the slider 710 press against the wall of the limiting groove 4220 away from the arc-shaped track groove 4210.

Referring to FIG. 45, in an embodiment of the disclosure, the slider anti-disengaging device 740 includes an elastic pulling body, and the slider 710 is abutted against one side of the limiting groove 4220 away from the arc-shaped track groove 4210 under a pulling force of the elastic pulling body. One end of the elastic pulling body is fixed in the housing 100 on the side away from the arc-shaped track groove 4210, and the other end of the elastic pulling body protrudes toward the side of the arc-shaped track groove 4210, and pulls the slider 710 or an auxiliary structure integrated with the slider 710, thus, a force opposite to the opening direction of the limiting groove 4220 is applied to the slider 710. The elastic pulling body in the disclosure can be any structure that is retractable and can generate pulling force. In an embodiment of the disclosure, the elastic pulling body is a tension spring, and a first pin body 770 is installed on the transmission mechanism 60. One end of the tension spring is hooked on the first pin body 770, a guide body 750 is provided with an annular groove 752 that is convenient for the tension spring to be hooked, and the other end of the tension spring is hooked in the annular groove 752, the stretching direction of the tension spring is parallel to the first straight line.

Considering the diversity of the slider anti-disengaging device 740, in another example of the disclosure, the slider anti-disengaging device 740 includes an elastic pressing body, and the slider 710 is pressed against a side of the limiting groove 4220 away from the arc-shaped track groove 4210 under the pressure of the elastic pressing body. One end of the elastic pressing body is fixed in the housing 100 of the cutting tool close to the side of the arc-shaped track groove 4210, and the other end of the elastic pressing body protrudes to the side of the limiting groove 4220, and is pressed against the slider 710 or an auxiliary structure integrated with the slider 710, thus, a force opposite to the opening direction of the limiting groove 4220 is applied to the slider 710. The elastic pressing body in the disclosure can be any structure that is retractable and can generate pulling force. In an embodiment of the disclosure, the elastic pressing body is a pressure spring.

It should be noted that the slider anti-disengaging device with the tension spring or the pressure spring can be implemented separately, so that the slider 710 can stably abut in the limiting groove 4220. For cutting tools with relatively large vibration or relatively harsh working environment, the tension spring and the pressure spring can also be set on one cutting tool at the same time, and cooperate with each other and act on the slider 710 at the same time.

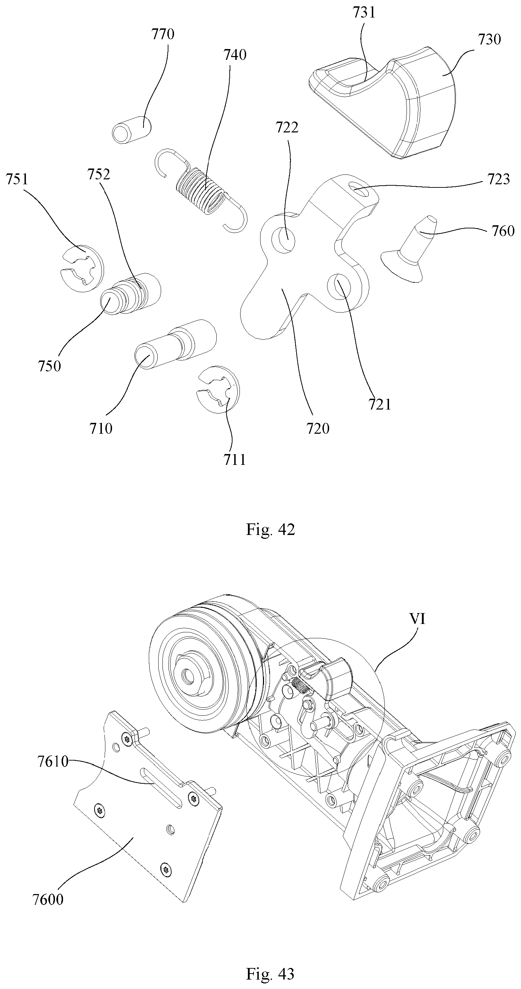

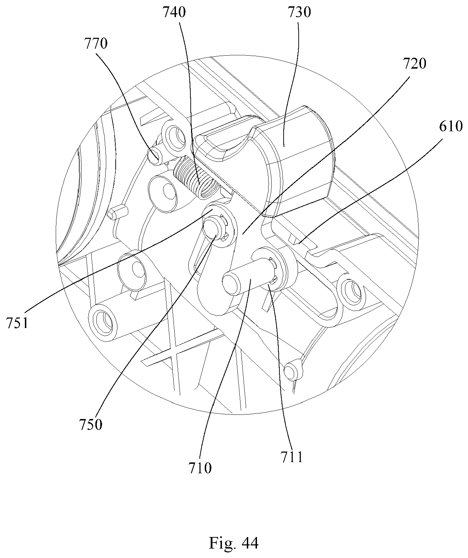

Referring to FIGS. 43 and 44, considering that most of the conventional cutting tools have an open structure on the side of the transmission mechanism 60 facing the blade guard 410, in one embodiment of the disclosure, the guard adjustment mechanism 700 is installed inside the transmission mechanism 60 of the cutting tool, a mounting plate 7600 is installed on the side of the cover 601 facing the blade guard. The mounting plate 7600 is detachably mounted on the side of transmission mechanism 60 of the cutting tool facing the blade guard 410 by connecting bolts. The mounting plate 7600 reduces the ingress of dust and water vapor, reducing corrosion and contamination of the transmission mechanism.

Referring to FIG. 41, in an embodiment of the disclosure, the mounting plate 7600 is provided with an elongated guiding through hole 7610, the extending direction of the guiding through hole 7610 is parallel to the first straight line, and the slider 710 is a cylinder on which a first stopping body 711 is arranged. The first stopping body 711 is a first collar clamped in a groove of the cylinder. An end of the slider 710 passes through the guiding through hole 7610 and extends into the adjustment track groove 420, then the first collar stops outside the opening of the guiding through hole 7610. Considering the stability of the slider 710 during the sliding process, in an embodiment of the disclosure, the slider mounting seat 720 is further provided with a second mounting hole 722, and the guide body 750 is mounted in the second mounting hole 722. A size of a guide segment of the guide body 750 matches a size of the guiding through hole 7610. The guide body 750 is provided with a second stopping body 751. The second stopping body 751 is a second collar clamped on the guide body 750. The guide segment is inserted into the guiding through hole 7610, and the second collar stops outside the opening of the guiding through hole 7610.

In the disclosure, the relative position of the arc-shaped track groove 4210 and the limiting groove 4220 is not limited, and the arc-shaped track groove 4210 is coaxial with the rotating shaft of the blade guard 410, which can ensure that the slider 710 can be in the arc-shaped track groove 4210 in the process of adjusting the blade guard 410. The plurality of limiting grooves 4220 can be set on the side away from the center of the rotating shaft of the blade guard 410, or can be set on the side of the arc-shaped track groove 4210 toward the center of the rotating shaft of the blade guard 410. Please refer to FIG. 45, in an embodiment of the disclosure, the arc-shaped track groove 4210 is disposed on the side of the limiting groove 4220 away from the center of the rotating shaft, so that a short adjustment stroke can be provided and the adjustment efficiency is high.

Referring to FIG. 45, in the disclosure, the structure of the side of the limiting groove 4220 away from the arc-shaped track groove 4210 is not limited, and can be any suitable closed shape. In one embodiment of the disclosure, sides of the plurality of limiting grooves 4220 away from the arc-shaped track groove 4210 are provided with a plurality of closed arc segments, and the two sides of each closed arc segment and the two side walls of the corresponding limiting groove 4220 are in smoothly transition, which can prevent the slider 710 from being blocked during the adjustment process.

In order to meet the needs of adjustment, the number of limiting grooves 4220 in the disclosure should be at least two. In an embodiment of the disclosure, five limiting grooves 4220 are communicated with the arc-shaped track groove, and the five limiting grooves are arranged within an adjusting angle range. An angle between circle centers of adjacent closed arc segments to an axis of the rotating shaft of blade guard is from 10° to 15°. This angle not only satisfies the adjustment with certain accuracy, but also does not affect the adjustment efficiency due to the too small angle.

Referring to FIG. 45, in order to make the slider 710 move smoothly in the arc-shaped track groove 4210 and the limiting grooves 4220, in an embodiment of the disclosure, the slider 710 is a round pin, and a part of the slider 710 inserted into the adjustment track groove 420 is a cylinder, and the cylinder is coaxial with the round pin. A width of each limiting groove 4220 is slightly larger than a diameter of the cylinder. Rounded corners are provided between the side walls of each limiting groove 4220 and side walls of the arc-shaped track groove 4210, and the rounded corners can guide the slider 710 to smoothly enter the next limiting groove 4220. In the disclosure, the cylinder extending into the adjustment track groove 420 can also be a fixed non-rotatable structure. During the adjustment process, there is sliding friction between the cylinder and the two side walls of the limiting groove 4220, but considering the wear and adjustment resistance, in one embodiment of the disclosure, the cylinder is rotatably mounted on the round pin. During the adjustment process, the cylinder rotates along the axis of the round pin.

To sum up, the battery pack is sealed and installed in the battery pack cavity, so that the corrosion and pollution of the dust and the cooling liquid to the battery pack can be effectively prevented. Through the corresponding communication relationship between the battery pack cavity air inlet on the battery pack cavity, the battery pack cavity air outlet on the battery pack cavity, and the battery pack heat dissipation hole on the battery pack, the air flow is forced to flow through gaps between the cells in the battery pack, the diffused heat dissipation of the battery pack is changed into the circulating air suction cooling, so that the heat dissipation state of the battery pack can be improved.

The above embodiments are only used to illustrate the disclosure but not to limit the technical solutions described in the disclosure. The understanding of this specification should be based on those skilled in the art. Although this specification has described the disclosure in detail with reference to the embodiments mentioned above, those skilled in the art should understand that those skilled in the art can still modify or equivalently replace the disclosure. All technical solutions and improvements that do not depart from the scope of the disclosure should be covered by the scope of the claims of the disclosure.

## Claims

1. A power tool, comprising:
a housing (100);
a motor mounted in the housing (100), the motor having a motor shaft (311);
a power supply, configured to provide energy for the motor;
a working assembly, rotating along a rotation axis (63) thereof; and
a transmission mechanism (60), having a transmission shaft (62), the transmission shaft (62) being connected by a coupling (61) with and on a same axis as the motor shaft (311), so as to transmit power from the motor to the working assembly;
a bevel gear assembly is arranged between the transmission shaft (62) and the rotation axis (63), the bevel gear assembly comprises a driving bevel gear (64) and a driven bevel gear (65), the driving bevel gear (64) is arranged on the transmission shaft (62),
and the driven bevel gear (65) is arranged on the rotation axis (63), wherein the rotation axis (63) of the working assembly intersects an axis of the transmission shaft (62), and
first bearings (621) are respectively installed at both ends of the transmission shaft (62),
**characterized in that** the motor is an outer rotor motor (310) and the first bearings (621) are installed in a cover (601) on the outside of the transmission mechanism (60) and the cover (601) is fixedly connected to the housing (100), so that each structural of the transmission mechanism (60) is covered inside the cover (601) and wherein the working assembly is a cutter, and a blade guard (410) is mounted on an outer side of the cutter,
and the blade guard (410) is fixedly connected to the cover (601) through a mounting base (403); the power tool further comprises a guard adjustment mechanism (700), and
the guard adjustment mechanism (700) is configured to adjust an angle of the blade guard (410).

2. The power tool according to claim 1, wherein a second bearing (402) is mounted in the mounting base (403), the second bearing (402) is sleeved on the rotation axis (63) and arranged between the mounting base (403) and the rotation axis (63), a shaft sleeve is provided between the rotation axis (63) and the cutter, and the shaft sleeve is coupled with the rotation axis (63); two step structures with different diameters are arranged on an outer side of the shaft sleeve, so as to adapt to two cutters having inner holes with different diameters.

3. The power tool according to claim 1 or 2, further comprising a cutter limiting device (660), wherein the cutter limiting device (660) comprises a limiting button (661), a limiting column (662) and a spring (663), the limiting button (661) is mounted on the housing (100), one end of the limiting column (662) is connected with the limiting button (661), and the other end of the limiting column (662) is provided with a gasket (54), and the spring (663) sleeves the limiting column (662) and is arranged between the gasket (54) and the limiting button (661); a plurality of limiting holes (651) matched with the limiting column (662) are arranged on the driven bevel gear (65), and when the limiting column (662) extends into one of a plurality of the limiting holes (651), the driven bevel gears (65) are locked, so that the cutter is locked.

## Patentansprüche

1. Elektrowerkzeug, umfassend:
ein Gehäuse (100);
einen in dem Gehäuse (100) montierten Motor, wobei der Motor eine Motorwelle (311) aufweist;
eine Stromversorgung, die ausgebildet ist, um Energie für den Motor bereitzustellen;
eine Arbeitsanordnung, die entlang einer Drehachse (63) davon rotiert; und
ein Getriebe (60), das eine Getriebewelle (62) aufweist, wobei die Getriebewelle (62) durch eine Kupplung (61) mit der Motorwelle (311) verbunden und auf einer gleichen Achse wie diese ist, um Leistung von dem Motor auf die Arbeitsanordnung zu übertragen;
eine Kegelradanordnung ist zwischen der Getriebewelle (62) und der Drehachse (63) angeordnet, die Kegelradanordnung umfasst ein treibendes Kegelrad (64) und ein getriebenes Kegelrad (65), das treibende Kegelrad (64) ist auf der Getriebewelle (62) angeordnet und das getriebene Kegelrad (65) ist auf der Drehachse (63) angeordnet,
wobei die Drehachse (63) der Arbeitsanordnung eine Achse der Getriebewelle (62) schneidet und erste Lager (621) jeweils an beiden Enden der Getriebewelle (62) angebracht sind, **dadurch gekennzeichnet, dass** der Motor ein Außenläufermotor (310) ist und die ersten Lager (621) in einer Abdeckung (601) an der Außenseite des Getriebes (60) angebracht sind und die Abdeckung (601) fest mit dem Gehäuse (100) verbunden ist, sodass jedes Strukturteil des Getriebes (60) innerhalb der Abdeckung (601) abgedeckt ist, und wobei die Arbeitsanordnung eine Schneidvorrichtung ist und eine Schutzhaube (410) an einer Außenseite der Schneidvorrichtung montiert ist und die Schutzhaube (410) über einen Montagesockel (403) fest mit der Abdeckung (601) verbunden ist; das Elektrowerkzeug umfasst weiter einen Schutzhaubenverstellmechanismus (700) und der Schutzhaubenverstellmechanismus (700) ist ausgebildet, einen Winkel der Schutzhaube (410) einzustellen.

2. Elektrowerkzeug nach Anspruch 1, wobei ein zweites Lager (402) in dem Montagesockel (403) montiert ist, das zweite Lager (402) auf die Drehachse (63) aufgeschoben ist und zwischen dem Montagesockel (403) und der Drehachse (63) angeordnet ist, eine Wellenhülse zwischen der Drehachse (63) und der Schneidvorrichtung vorgesehen ist, und die Wellenhülse mit der Drehachse (63) gekoppelt ist; zwei Stufenstrukturen mit unterschiedlichen Durchmessern an einer Außenseite der Wellenhülse angeordnet sind, um sich an zwei Schneidvorrichtung anzupassen, die Innenbohrungen mit unterschiedlichen Durchmessern aufweisen.

3. Elektrowerkzeug nach Anspruch 1 oder 2, weiter umfassend eine Arretiervorrichtung (660) für die Schneidvorrichtung, wobei die Arretiervorrichtung (660) für die Schneidvorrichtung einen Arretierknopf (661), einen Arretierstift (662) und eine Feder (663) umfasst, der Arretierknopf (661) auf dem Gehäuse (100) montiert ist, ein Ende des Arretierstifts (662) mit dem Arretierknopf (661) verbunden ist, und das andere Ende des Arretierstifts (662) mit einer Unterlegscheibe (54) vorgesehen ist, und die Feder (663) den Arretierstift (662) umgibt und zwischen der Unterlegscheibe (54) und dem Arretierknopf (661) angeordnet ist; eine Vielzahl von Arretierbohrungen (651), die auf den Arretierstift (662) abgestimmt sind, auf dem getriebenen Kegelrad (65) angeordnet sind, und wenn sich der Arretierstift (662) in eine von einer Vielzahl der Arretierbohrungen (651) erstreckt, wird das getriebene Kegelrad (65) arretiert, so dass die Schneidvorrichtung arretiert ist.

## Revendications

1. Outil électrique, comprenant :
un boîtier (100) ;
un moteur monté dans le boîtier (100), le moteur présentant un arbre moteur (311) ;
une alimentation électrique, configurée pour fournir de l'énergie pour le moteur ;
un ensemble de travail, tournant selon un axe de rotation (63) de celui-ci ; et
un mécanisme de transmission (60), présentant un arbre de transmission (62), l'arbre de transmission (62) étant relié par un accouplement (61) à l'arbre moteur (311), coaxialement à celui-ci, de manière à transmettre la puissance du moteur à l'ensemble de travail ;
un ensemble d'engrenages coniques est agencé entre l'arbre de transmission (62) et l'axe de rotation (63), l'ensemble d'engrenages coniques comprend un engrenage conique menant (64) et un engrenage conique mené (65), l'engrenage conique menant (64) est agencé sur l'arbre de transmission (62), et l'engrenage conique mené (65) est agencé sur l'axe de rotation (63), dans lequel l'axe de rotation (63) de l'ensemble de travail est en intersection avec un axe de l'arbre de transmission (62), et des premiers roulements (621) sont installés aux deux extrémités respectives de l'arbre de transmission (62), **caractérisé en ce que** le moteur est un moteur à rotor externe (310) et les premiers roulements (621) sont installés dans un carter (601) sur l'extérieur du mécanisme de transmission (60) et le carter (601) est relié de manière fixe au boîtier (100), de sorte que chaque structure du mécanisme de transmission (60) soit recouverte à l'intérieur du carter (601), et dans lequel l'ensemble de travail est un organe de coupe, et une garde de lame (410) est monté sur le côté externe de l'organe de coupe, et la garde de lame (410) est reliée de manière fixe au carter (601) par l'intermédiaire d'une base de montage (403) ; l'outil électrique comprend en outre un mécanisme (700) de réglage de la garde de lame, et le mécanisme (700) de réglage de la garde de lame est configuré pour régler un angle de la garde de lame (410).

2. Outil électrique selon la revendication 1, dans lequel un deuxième roulement (402) est monté dans la base de montage (403), le deuxième roulement (402) est engagé de manière ajustée sur l'axe de rotation (63) et est agencé entre la base de montage (403) et l'axe de rotation (63), un manchon d'arbre est placé entre l'axe de rotation (63) et l'organe de coupe, et le manchon d'arbre est relié à l'axe de rotation (63) ; deux structures étagées présentant des diamètres différents sont agencées sur un côté externe du manchon d'arbre, de manière à s'adapter à deux organes de coupe présentant des trous intérieurs de diamètres différents.

3. Outil électrique selon la revendication 1 ou la revendication 2, comprenant en outre un dispositif (660) de limitation de l'organe de coupe, le dispositif (660) de limitation de l'organe de coupe comprenant un bouton de limitation (661), une tige de limitation (662) et un ressort (663), le bouton de limitation (661) est monté sur le boîtier (100), une extrémité de la tige de limitation (662) est reliée au bouton de limitation (661), et l'autre extrémité de la tige de limitation (662) est pourvue d'une garniture (54), et le ressort (663) est en engagement ajusté sur la tige de limitation (662) et est agencé entre la garniture (54) et le bouton de limitation (661) ; une pluralité de trous de limitation (651), en correspondance avec la tige de limitation (662), sont aménagés sur l'engrenage conique mené (65), et, lorsque la tige de limitation (662) s'étend dans l'un des trous d'une pluralité des trous de limitation (651), les engrenages coniques menés (65) sont verrouillés, de sorte que l'organe de coupe est verrouillé.
